# EUROPEAN PATENT SPECIFICATION

(11) **EP 2 689 386 B1**
(45) Date of publication and mention of the grant of the patent: **11.07.2018**
(21) Application number: 12763395.6
(22) Date of filing: 26.03.2012
(51) Int. Cl.: G06Q 30/06, G06Q 30/02, G06Q 20/32, G06Q 20/20, G07G 1/00, G07G 3/00

(54) **IN-PERSON ONE-TAP PURCHASING APPARATUSES, METHODS AND SYSTEMS**
PERSONALISIERTE VORRICHTUNGEN, VERFAHREN UND SYSTEME FÜR EINKÄUFE AUF KNOPFDRUCK
APPAREILS, PROCÉDÉS ET SYSTÈMES D'ACHAT À UNE SEULE SOURCE EN PRÉSENCE DE LA PERSONNE

(30) Priority: 25.03.2011 US 201161467890 P; 25.03.2011 US 201161467969 P; 26.03.2012 US 201213429670
(43) Date of publication of application: 29.01.2014
(73) Proprietor: Visa International Service Association, San Francisco, California 94128-8999 (US)
(72) Inventor: KATZIN, Edward, Foster City, California 94404 (US); HAMMAD, Ayman, Foster City, California 94404 (US); HUA, Julian, Foster City, California 94404 (US); WALD, Jerry, Foster City, California 94404 (US)
(74) Representative: Anderson, Oliver Ben
(86) International application number: PCT/US2012/030560
(87) International publication number: WO 2012/135115

(56) References cited:
- DE-A1-102008 032 872
- JP-A- 2005 293 022
- US-A1- 2002 002 504
- US-A1- 2002 065 728
- US-A1- 2006 043 175
- US-A1- 2008 139 306
- US-A1- 2008 237 340
- US-A1- 2009 055 278
- US-A1- 2009 192 892
- US-A1- 2010 287 057
- US-B1- 7 680 702

## Description

### BACKGROUND

### 1. Field of the Art

This disclosure is generally related to financial and cost/price determination data processing, and more specifically related to electronically assisted shopping in brick-and-mortar retail stores.

### 2. Background

Retail stores are a staple of modern-day living. They carry the necessities of life, such as food and medicines, as well as luxury items, such as jewelry and consumer electronics. These physical, 'brick-and-mortar' stores employ a familiar, well-known layout, with shelves and displays of merchandise occupying the bulk of the store and cashier areas near the front or exit. Consumers enter freely into the store, often pick up shopping carts or carryable baskets, and browse items in the merchandise area where the displays of inventory beckon for purchasing.

Consumer transactions typically require a customer to select items from a display of store inventory and then produce the items at a checkout location to initiate a purchase transaction. Item information is typically entered into a point-of-sale (POS) terminal device, or the information is automatically entered by scanning barcodes on product packages with a barcode scanner. The customer is usually provided with a number of payment options, such as paying by cash, check, credit card or debit card. Once a payment is made and approved, the point-of-sale terminal memorializes the transaction in the merchant's computer system, and a paper receipt is generated indicating the satisfactory consummation of the transaction.

In some stores, a security guard or other store representative double-checks the paper receipt with items in consumers' bags as the consumers exits. This can prevent shoplifting and fraud.

Strides have been made in speeding transactions, tracking inventory, and reducing theft. Mechanical cash registers have given way to POS terminals and electronic registers that are integrated with stores' electronic inventory databases. Universal Product Code (UPC) barcodes are almost universal on packaging and allow for scanning by inexpensive scanners. Radio frequency identification (RFID) tags and/or two-dimensional barcodes, such as QR Code® (quick-response code) two-dimensional matrix codes, may streamline product identification even further. Anti-theft devices, such as disposable anti-theft tags and anti-theft towers or pillars near store exits that sense them, have become more widespread. All of these technologies contribute to the smooth, efficient operation of retail stores for store owners and a more streamlined experience for consumers. However, the customer experience is far from frictionless. Despite all of the new technologies, customers often find themselves still having to wait in line with other customers to purchase items.

Self-checkout technologies have gained acceptance in some types of stores such as supermarkets, high volume retailers, and home improvement stores. Yet, many stores have found that employing self-checkout technologies does not avoid customers waiting impatiently in lines. Current self-checkout machines are expensive, they occupy valuable space at the front of the stores, and there can only be so many of them available at one time. They also invite a bit of theft because relatively few employees watch multiple customer transactions occurring in parallel.

Consumer-friendly smart phones, popularized by the iPhone® cellular phone available from Apple Inc. of Cupertino, California, have been suggested as an in- store shopping device through which a consumer may purchase items. Other smart phones, such as Google (of Mountain View, California) Android™ operating system- based phones, Microsoft (of Redmond, Washington) Windows Mobile® operating system-based phones, and BlackBerry® smart phones from Research in Motion Ltd. of Ontario, Canada, are mobile devices that offer similar functionality.

Software applications for smart phones and other mobile devices, otherwise known as "apps," have been developed to be able to photograph a barcode and then decode the associated number. These barcode-reading apps can queue a database through a wireless connection to a network in order to look up the product associated with the barcode.

U.S. Patent Application No. 2010/0082447 A1, published April 1, 2010 and assigned to Apple, Inc., discloses that a shopper can scan items in a store with an iPhone, add them to a shopping list, and then check out electronically. The user's shopping list can be edited, and multiple items can be purchased at once through the phone. A user can select a "buy now" button and then be notified for when the item is ready for pickup.

There exists a need in the art for a more streamlined shopping experience for consumers with protection against shoplifting for store owners.

US 2010/287057 A1 describes a system to support a shopper to perform self-service shopping by using an electronic shelf label (ESL) while looking at actual items displayed in a store and to expand the functions of the electronic shelf label (ESL) to enable the linkage with other data processing systems expansively. A shopper uses a mobile processing device (typically, a cell phone owned by the shopper) in a store. The functions necessary to obtain contents from the electronic shelf label (ESL) are obtained by introducing an application program into the shopper's own cell phone, by which it is expected that the shopper is able to easily enjoy shopping. When photographing the electronic shelf label (ESL), the contents associated with items are encoded (the price display automatically changes to a barcode) and then decoded.

DE 10 2008 032872 A1 describes a security system (SYS) for a sales device, comprising at least one first device (CP) for generating a payment receipt for purchased goods and/or services, and comprising at least one second device (CTR) for examining the payment receipt, wherein the first device (CP) generates an electronic payment receipt in the form of an ID (CD) and comprises a transmitting device (CP-S) that wirelessly transmits the ID (CD) to a mobile device (M), and that the second device (CTR) comprises at least one receiving device (CTR-R; SCN) that wirelessly receives the ID (CD) from the mobile device (M). The first device can be a checkout system (CP), in particular a self-service checkout system and/or vending machine. The second device (CTR) can be a control system that can be installed in the output area of the sales device, in particular a control gate system (CTR).

US2009/055278 A1 describes the incorporation scanning technology and secure payment technology into the operating system (OS) of a mobile device such as a smartphone. In one example, the scanning technology comprises RFID interrogation capability. This enables smartphone users to validate transactions during a shopping session at a retail location (i.e., scan items as they are added to their shopping cart) and streamline the payment process by electronically transmitting their credit/debit card information directly to their financial institution to authorize payment to finish the transaction, all while within the retail location.

### BRIEF SUMMARY

### The invention is defined by the claims.

Generally, the application is related to smart phone-assisted shopping in brick-and-mortar retail stores with an app networked with the stores' purchase and anti-theft system. In some cases, a user scans an item with his or her own mobile phone, purchases it using One tap' of his or her finger or other stylus, receives an electronic receipt on the phone, and the stores' inventory and anti-theft systems are automatically updated so that the user is allowed to egress the store with the item. For large purchases, authentication of the user by video chat with a remote customer service representative can be employed, automatically altering fraud risk scores based on whether a video chat was accepted and/or conducted. The updated fraud risk score can be tied to a theft-prevention or management system.

The application is also generally directed to an interception of a credit card authorization request within a payment network, and a presentation to the user of different cards that could be used in the user's e-wallet. The different cards can participate in an automated auction to present competing offers for using their card. Different products and/or competing merchants with the same or competing products can be promoted to the user while he or she is focused on his or her mobile phone.

Described herein is a method of authentication for mobile device-assisted in-person shopping. The method includes obtaining, by a mobile device, a product identifier for a potential purchase item based on an in-person capture of the product identifier at a retail store, determining a price of the potential purchase item from a database associated with the retail store, displaying, on the mobile device, an interface element operative to indicate consent from the consumer to charge an account of the consumer for the potential purchase item and calculating a first risk score based on the price of the potential purchase item. The method further includes comparing the first risk score to a threshold value, sending, from at least one server, a message to the mobile device based on the comparison of the first risk score to the threshold value, the message having an interface element operative to initiate a video chat session between the consumer and a customer service representative, opening a video chat session based on a selection of the interface element in the message by the consumer, calculating a second risk score based on the first risk score and the opening of the video chat session, and receiving, at the mobile device, an electronic receipt for an approved purchase of the item.

Also described herein is a system for mobile device-assisted shopping. The system comprises a mobile device, which itself includes a camera operable to capture a product identifier from a product package, a network interface operable to look up a price using the product identifier and receive a message having an interface element, and a display operable to display an interface element operable to indicate consent from a consumer to purchase a product identified by the product identifier and operable to display the interface element in the message operable to initiate a video chat session between the consumer and a customer service representative. The system also includes at least one server computer executing instructions in a computer program, the computer program instructions including program code for calculating a first risk score based on the price, program code for calculating a second risk score based on the price and an opening of a video chat session between the consumer and the customer service representative, and program code for sending an electronic receipt for an approved purchase of the item.

Also described herein is a method of automatically checking out an item using a mobile device in a retail store. The method includes obtaining a product identifier for a potential purchase item based on an in-person capture of the product identifier by a mobile device of a consumer at a retail store, identifying a merchant for the potential purchase item, the merchant associated with the retail store, determining a price of the potential purchase item based on the merchant, obtaining, using the mobile device, consent from the consumer to purchase the item, initiating, using the mobile device, a purchase transaction with the identified merchant for the potential purchase item based on the consumer's consent, receiving on the mobile device an electronic receipt having a merchant verifiable code, the receipt based on the purchase transaction, producing from the mobile device the verifiable code while the mobile device is proximate to a reader at the retail store, and receiving an indication that the verifiable code is valid, thereby allowing the consumer to egress the retail store with the item.

Also described herein is a method of automatically checking out an item using a mobile device in a retail store. The method includes obtaining a product identifier for a potential purchase item based on an in-person capture of the product identifier by a mobile device of a consumer at a retail store, determining a price of the potential purchase item, receiving consent from the consumer to charge an account of the consumer, charging the account of the consumer for a purchase of the item, receiving an indication that the charging of the account was successful, generating an electronic receipt having a verifiable code based on the received indication, sending the electronic receipt to the mobile device of the consumer, reading the verifiable code from the mobile device, verifying that the verifiable code read from the mobile device is valid, and sending an indication that the verifiable code is valid to allow the consumer to egress the retail store with the item.

Also described herein is a method of presenting competing purchase account offers during mobile device-assisted shopping purchase transactions. The method includes receiving an authorization request from an acquirer for payment from a first payment account of a consumer to a merchant, determining an offer for using a second payment account associated with the consumer, the determining based on receiving the authorization request, sending the determined offer to the consumer, receiving a selection of the offer from the consumer, revising the authorization request to request a payment from the second payment account of the consumer, and sending the revised authorization request to an issuer associated with the second payment account.

Also described herein is a method of presenting competing product offers during mobile device-assisted shopping purchase transactions. The method includes receiving a first authorization request from an acquirer for payment from a payment account of a consumer to a first merchant, receiving a product identifier for an item to be purchased, determining an offer for a competing item or second merchant, the determining based on receiving the first authorization request and the received product identifier or first merchant, sending the offer to the consumer, receiving a selection of the offer from the consumer, canceling the first authorization request based on the received selection, generating a second authorization request for payment from the payment account of the consumer to the second merchant for the offer, and sending the second authorization request to an issuer associated with the payment account.

Also described herein is a method of updating an anti-theft system at a retail store for mobile device-assisted shopping. The method includes obtaining a product identifier for a potential purchase item based on an in-person capture of the product identifier by a mobile device of a consumer at a retail store, determining a price of the potential purchase item, receiving consent from the consumer to charge an account of the consumer, charging the account for a purchase of the item, receiving an indication that the charging of the account was successful, and sending an indication to an anti-theft system that the item is free to leave the retail store.

Also described herein are machine-readable tangible storage media and computer systems that employ or store instructions for the methods described above.

A further understanding of the nature and the advantages of the examples disclosed and suggested herein may be realized by reference to the remaining portions of the specification and the attached drawings.

### BRIEF DESCRIPTION OF THE DRAWINGS

FIG. 1 is a block diagram illustrating example aspects of in-person one-tap purchasing in accordance with an embodiment.
FIG. 2A illustrates capturing a product identifier in accordance with an embodiment.
FIG. 2B illustrates showing product information and promotion information in accordance with the embodiment of FIG. 2A.
FIG. 2C illustrates a "buy now" aspect in accordance with the embodiment of FIG. 2A.
FIG. 2D illustrates a purchase confirmation in accordance with the embodiment of FIG. 2A.
FIG. 2E illustrates an electronic receipt in accordance with an embodiment.
FIG. 2F illustrates using an electronic receipt to disarm a store anti-theft system in accordance with an embodiment.
FIG. 3A illustrates capturing a product identifier in accordance with an embodiment.
FIG. 3B illustrates an authorization screen in accordance with an embodiment.
FIG. 3C illustrates an altered authorization screen of FIG. 3B.
FIG. 3D illustrates a message with an interface element operative to initiate a video chat session between a user and a customer service representative in accordance with an embodiment.
FIG. 3E illustrates the opening of a video chat session with a customer service representative on a smart phone in accordance with an embodiment.
FIG. 3F illustrates a text challenge on a mobile device in accordance with an embodiment.
FIG. 3G illustrates a privacy selection screen on a mobile device in accordance with an embodiment.
FIG. 3H illustrates an electronic receipt having a merchant verifiable code displayed on a mobile device in accordance with an embodiment.
FIG. 4 is a logic flow diagram illustrating example aspects of conducting a mobile product purchase transaction in accordance with an embodiment.
FIG. 5 is a logic flow diagram illustrating example aspects of selecting purchase options for a mobile product purchase transaction in accordance with an embodiment.
FIG. 6A is a data flow diagram illustrating an example procedure to execute a card-based transaction resulting in raw card-based transaction data in accordance with an embodiment.
FIG. 6B is a continuation of the data flow diagram of FIG. 6A.
FIG. 6C is a data flow diagram illustrating an example procedure to execute a card-based transaction resulting in raw card-based transaction data in accordance with the embodiment of FIG. 6A.
FIG. 7A is a logic flow diagram illustrating example aspects of executing a card-based transaction resulting in generation of raw card-based transaction data in accordance with an embodiment.
FIG. 7B is a continuation of the logic flow diagram of FIG. 7A.
FIG. 7C is a logic flow diagram illustrating example aspects of executing a card-based transaction resulting in generation of raw card-based transaction data in accordance with an embodiment.
FIG. 7D is a continuation of the logic flow diagram of FIG. 7C.
FIG. 8 is a block diagram illustrating embodiments of a controller in accordance with an embodiment.
FIG. 9 is a flowchart of a process in accordance with an embodiment.
FIG. 10 is a flowchart of a process in accordance with an embodiment.
FIG. 11 is a flowchart of a process in accordance with an embodiment.
FIG. 12 is a flowchart of a process in accordance with an embodiment.
FIG. 13 is a flowchart of a process in accordance with an embodiment.
FIG. 14 is a flowchart of a process in accordance with an embodiment.

The figures will now be used to illustrate different embodiments in accordance with the invention. The figures are specific examples of embodiments and should not be interpreted as limiting embodiments, but rather exemplary forms and procedures.

### DETAILED DESCRIPTION

Mobile device-assisted shopping in retail stores can employ apps that merely require a consumer to scan an item and then tap one figure or stylus in order to consummate a purchase. Such apps, sometimes referred to herein as In-Person One-Tap (IPOT) solutions, can minimize transactional friction when purchasing in retail stores and thereby facilitate more sales.

Such solutions can come with peril for store owners, however, in that more theft may occur because consumers do not need to present their goods for scanning by a cashier in order to leave the store with them. Yet, electronic receipts, advanced authentication, and networking between consumers' smart phones and the stores can alleviate this risk. Embodiments are disclosed in the present application to such methods, systems, and devices that will make the technical solutions apparent to one skilled in the art.

A user can download an app to his or her personal mobile device that can function as a product and price identifier, purchasing e-wallet, and automated proximity token for exiting a store with the item. For higher cost items, a customer service representative can request a video chat with the customer in order to look them in the eye and lower the risk of a possibly problematic transaction. Background servers can display competing offers to the user-during a credit card transaction-so that the user can ultimately decide the best deal.

Technical advantages of the embodiments are many. Pushing out an app to retail store customers' smart phones that allows the customers to scan and purchase their own items reduces the need for cash registers, point of sale devices, and other capital equipment in the store, which in turn reduces wear and tear on existing devices and may allow less equipment to be needed at any one time. It also reduces the number of man-machine interfaces that people touch, lowering the transmission of surface-borne diseases among those who shop and are employed in the stores. Besides needing less capital equipment, fewer cashiers, courtesy, price-check, and other employees are needed.

Consumers use their own cell phones with which they are familiar and comfortable. Checkout and other interaction times are a function of the speed of their smart phones; therefore, consumers with faster cell phones receive slightly faster service. Many consumers update their cell phones every two years, and so the speed of checkout may increase every couple of years for many.

Connecting a machine-readable electronic receipt with a merchant-verifiable code, such as a barcode, can automate egress from a store. Instead of an employee checking off a consumer's paper receipt as he or she exits a store, a barcode allows the system to be automated. As a user's phone is passed near a camera at an exit to the store, a reader reads the barcode, determines that it is valid, checks it against items in the store's inventory, and automatically 'safes' an anti-theft alarm system so that sensing an anti-theft tag in the user's bag does not trip the alarm. The interaction between the smart phone, payment authorization infrastructure, store inventory, and anti-theft system allows less capital equipment and other resources to be needed by the store while preventing theft.

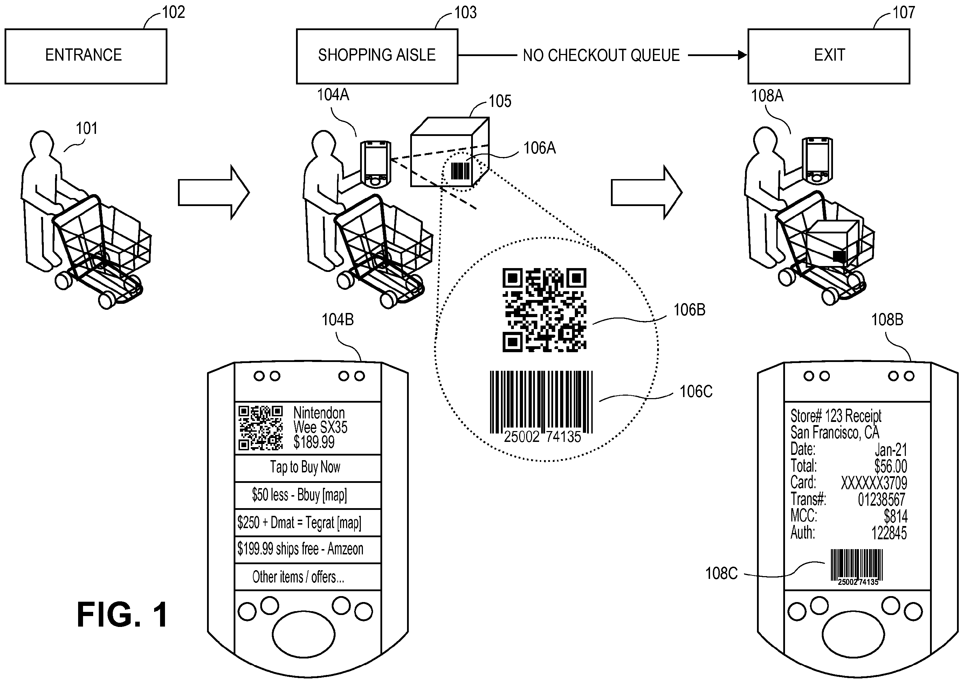

FIG. 1 is a block diagram illustrating example aspects of in-person one-tap purchasing. In some implementations, a user, e.g., 101, may desire to purchase products, services and/or other offerings ("products") in-person. The user may enter entrance 102, into a building storefront, warehouse, show venue, outdoor market, lumberyard, or other retail store to purchase a product. The user inspects products available at the store in aisle 103 in person and may desire to learn more about a product. The user scans product 105 using client device 104a.

For example, the user may capture information about a product identification (e.g., barcode, RFID, QR code) associated with the product. The user may obtain an image, a video, a live stream, etc. of the product identification associated with the product. Client device 104a provides the obtained information to a server. The client device may send a server a (Secure) HyperText Transfer Protocol (HTTP(S)) POST/GET message, electronic mail message, Short Messaging Service (SMS) message, HTTP/Real Time Streaming Protocol (RTSP) video stream, etc., including the captured information about the product identification associated with the product.

In some implementations, the server may utilize the capture information about the product identification associated with the product to identify the product that the user desires to learn about. For example, the server may parse the message provided by the client device and extract the product identification information based on the parsing. The server may access a database and search for product offers to provide to the user based on the product identification information extracted from the message from the client device. For example, the server may utilize a Hypertext Preprocessor (PHP) script to issue Structured Query Language (SQL) commands to query a relational database for product offers to provide the user. The database may have stored information on various merchants, merchant locations, offers, discounts, coupons, advertisements, and/or the like, which may be provided to the user. In some implementations, the server may utilize the location of the client device (e.g., using Global Position System (GPS) location data), as well as the product identification information to query the database for product offers to provide the user.

In some implementations, the server may provide the results obtained from the database to client device 104b. For example, the client device may be executing an application module ("app") via which the client device may communicate with the server. The client device may display the obtained results from the server via the app to the user.

In some implementations, the app may provide the user an option to buy the product on the spot by performing a single action (e.g., tap, swipe touchscreen of a mobile device, press a key on a keyboard, perform a single mouse click).

In some implementations, the app may provide the user various alternate options. For example, the app may provide the user with alternate merchants where the user may obtain the product and/or similar products, alternate products that may be comparable to the product, competitive pricing information between merchants, discounts, coupons, and/or other offers for the user, etc. In some implementations, the app may indicate that the user may earn rewards points if the user purchases the product at another merchant. In some implementations, the app may indicate that it may be required to use fewer rewards points to pay for the purchase transaction if the user purchases the product at another merchant, because the other merchant may have a better relationship with the rewards points provider. In some implementations, the app may indicate that the user may earn more rewards points if the uses a specific (or alternative) card to pay for the purchase transaction. In some implementations, the app may indicate that the user may obtain a greater amount of cash back if the user purchases the card at an alternate merchant and/or using an alternate card. In various implementations, offers to the user including and similar to those described herein may originate from various entities and/or system components, including but not limited to: merchants, pay networks, card issuers, acquirers, and/or the like.

In some implementations, user 101 may purchase the product on the spot from the current merchant and/or other merchant(s) by performing the single action on the user device (e.g., one tap of a touchscreen of the user device). In such implementations, the server may initiate a card-based purchase transaction using a card (e.g., credit card, debit card, prepaid card, etc.) associated with the client device and/or user. For example, the app may allow the user to select a card from a virtual electronic wallet ("e-wallet" or "ewallet") of the user to utilize for the purchase transaction.

In some implementations, the server may be able to arbitrage credit card payment networks in that a merchant, card issuer, acquirer, pay network, and/or the like entities and/or components may switch how payments for the user are processed because of transaction cost considerations.

In some implementations, the server may initiate the card-based purchase transaction and generate a purchase confirmation receipt for the user. The server provides the purchase confirmation receipt to client device 108b. In some implementations, the user may desire to immediately exit the store after purchasing a product via the app.

In such implementations, the user may be required to provide proof of purchase of the product at the exit of the store. The user may utilize the purchase confirmation receipt obtained from the server via the app on the client device to provide proof of product purchase 108a. The receipt includes purchase identifier 108c. Purchase identifier 108c includes a barcode, but other purchase identifiers can include a QR code, an image of a receipt, a video of a purchase action, etc. The user may utilize such confirmations of the purchase as proof at the exit of the store. Accordingly, in some implementations, the user may skip a checkout line at the store altogether and gain efficiency in the shopping experience.

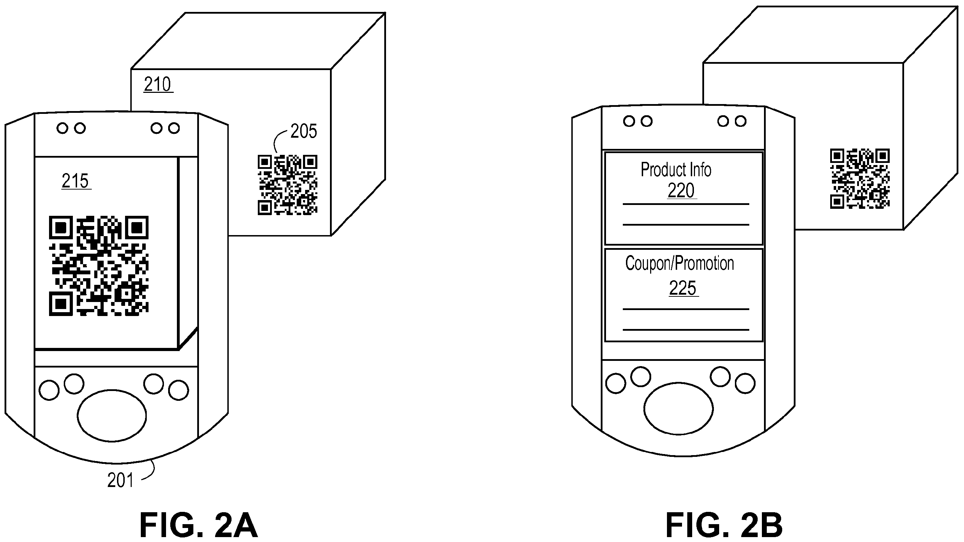

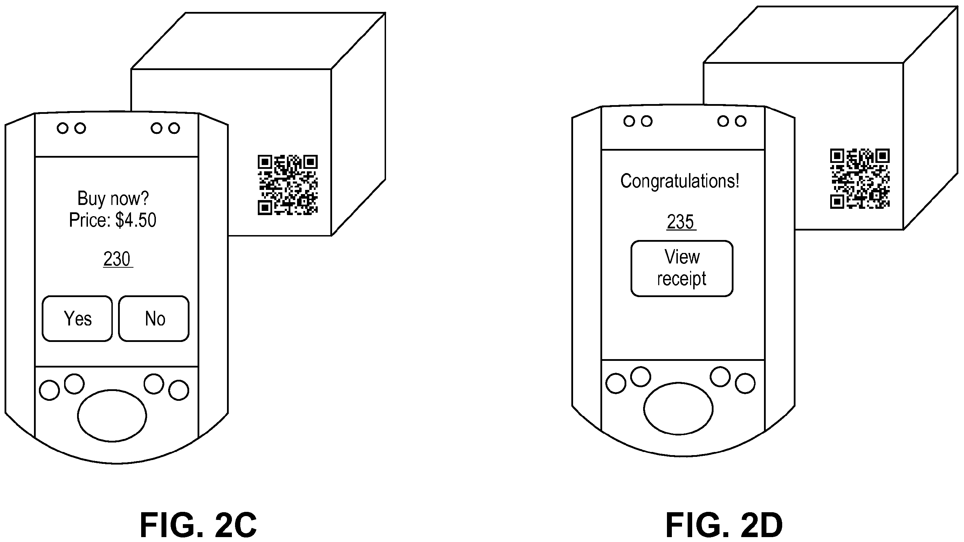

FIGS. 2A-2D illustrate capturing a product identifier and purchasing. In some implementations, a server may transform product identification information about a product via various components into consumer-friendly product offer information and enable one-tap product purchases. For example, the server obtains information 215, about product 210 via product identifier 205 that was scanned by mobile device 201. The server may transform this product identifier information into detailed product information 220, such as price and product description, as well as coupons and promotions 225, advertisements, etc. The server may provide pricing information 230 on the product and/or related and/or similar products and may provide the user an option to purchase the product on the spot and/or at competing merchants. In some implementations, the system may provide a proof of purchase for the user, such as through button 235 to view such information, so that the user can provide a proof of purchase to a store employee or scanner should it become necessary.

Mobile device 201 may be owned personally by the user, given out temporarily to customers by the store, or otherwise be available to consumers. The device can be a smart phone, such as an iPhone or Android-based cellular phone.

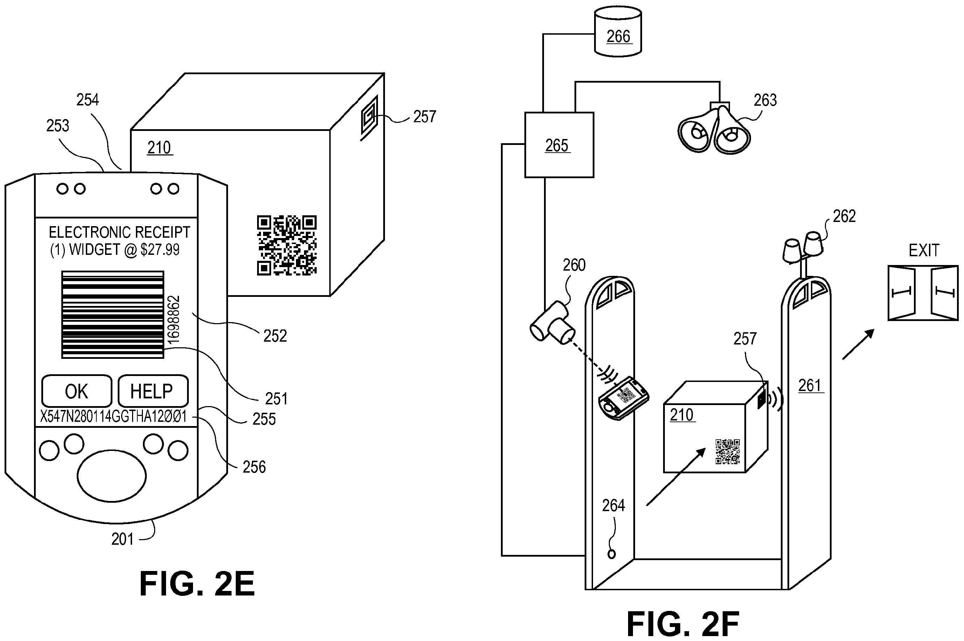

FIG. 2E illustrates the an electronic receipt to automatically disarm a store anti-theft system. Mobile device 201, with rear-facing camera 253 and network interface 254, has display 255. The display shows electronic receipt 252 with confirmation barcode 251. Confirmation barcode 251 holds a code that corresponds to the receipt. Additionally, digital certificate 256 corresponds to the receipt. The electronic receipt associates the product identifier, the store, and the purchase transaction.

FIG. 2F illustrates an integrated anti-theft system/device. Scanner reader 260 optically reads barcode 251 shown on display 255 of mobile device 201. The numerical code from the barcode is sent from camera 260 to server 265, which is connected with the rest of the anti-theft system. Server 265 queries database 266 with the numerical code to see if there is a match.

In some embodiments, a wireless signal, such as one corresponding to the Wi-Fi or Bluetooth® specification, can be sent from the mobile device, the wireless signal including the verifiable code. The wireless signal can be read by an appropriate reader.

If there is a match in database 266, then a notation is made to disarm the anti-theft system for a product with an anti-theft tag that is about to exit the store. For example, a timestamp is saved in the database for an entry corresponding the product. When anti-theft tower 261 detects anti-theft tag 257 on item 210, a signal is sent through interface 264 to server 265. Server 265 queries database 266 for a product with the matching tag.

In a nominal situation, the product is found in the same entry in database 266 as the numerical code for the barcode that was just found. Based on a match existing, the server indicates that the item is free to leave the retail store. Based on the indication, audio siren 263 and visual alarm 262 are disarmed, and a customer carrying product 210 is allowed to egress the store unimpeded.

If there is no match in database 266 for the barcode, then the barcode is probably invalid. The user holding the mobile device in front of the scanner may be asked to scan another barcode.

If there is no match in database 266 for anti-theft tag 257 detected by anti-theft pillar 261, then alarms 262 and 263 blare or otherwise activate, drawing attention to the shopper who is attempting to exit the store. Because many current anti-theft systems activate simply when an anti-theft tag is detected, it can be said that server 265 "disarms" the anti-theft system if a match is found.

Database 266, which may be part of an inventory system, can be updated based on the detection by the anti-theft device of the anti-theft tag. After a consumer scans an item and purchases it on his or her own mobile device in the store, the database may place a "sold but still in store" marker in a database entry corresponding to the item. After the consumer exits through the anti-theft pillars and the item's anti-theft tag is detected, the database may place a "sold and exited" marker in the database entry. In alternate embodiments in which items are fungible with each other and not individually tracked (e.g., by serial number), a quantity in a database can be updated to reflect the number of items that are "sold but still in store" and "sold and exited."

A technical advantage of the distinction between the "sold but still in store" and "sold and delivered" is that an item can be tracked with greater precision. If an item is missing, the store can better reconcile whether an item was purchased and simply left behind in the store. Additionally, the timestamp for when an item was purchased can be compared with the time at which the product exits the store, producing a metric on how long a customer browsed a store before leaving with his or her purchases. Comparing the timestamps of different items bought at different times within the store can give a metric on what customers initially came into the store to purchase-presumably their first item bought-and what subsequently caught their eyes or was an impulse purchase.

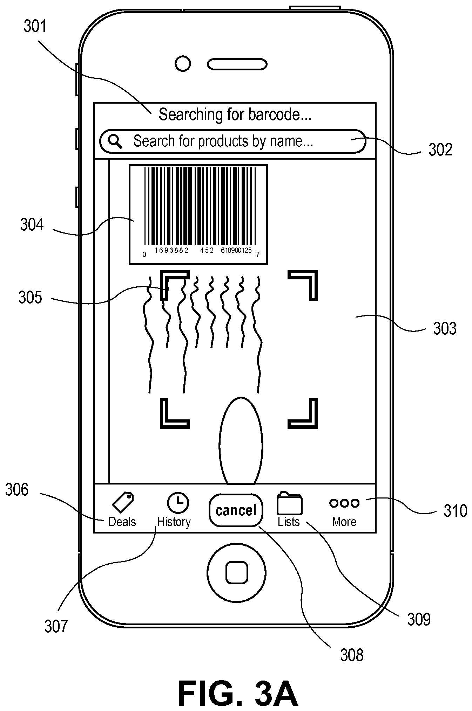

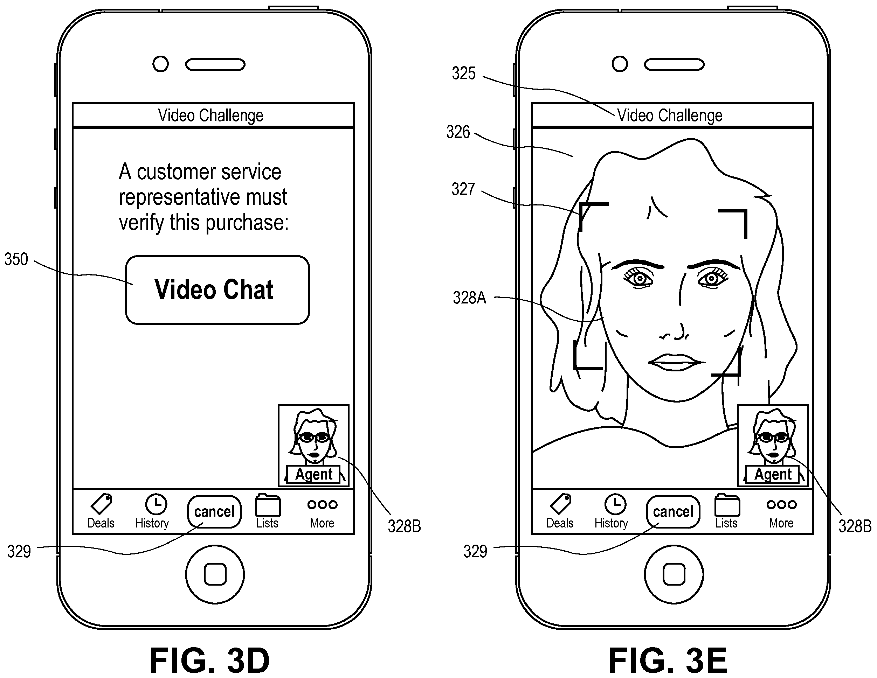

FIGS. 3A-3D illustrate various interfaces on a smart phone in accordance with an embodiment. In some implementations, the app may be configured to recognize product identifiers (e.g., barcodes, QR codes). In some implementations, the user may be required to sign in to the app to enable its features. Once the app is enabled, a camera on the smart phone may provide in-person one tap purchasing features for the user. For example, the client device may have a camera via which the app may acquire images 303, video data, streaming live video, and/or the like. The app may be configured to analyze the incoming data and perform search 301 through query interface 302 for product identifier 304. In some implementations, the app may overlay cross-hairs, a target box, and/or like alignment reference markers 305, so that a user may align the product identifier using the reference markers so facilitate product identifier recognition and interpretation. In some implementations, the app may include interface element 306 in order to allow the user to switch back and forth between the product identification mode and the product offer interface display screens so that a user may accurately study the deals available to the user before capturing a product identifier. In some implementations, the app may provide the user with the ability to view prior product identifier captures, such as through soft "History" button 307, so that the user may be able to better decide which product identifier the user desires to capture. In some implementations, the user may desire to cancel product purchasing; the app may provide the user with user interface element 308 to cancel the product identifier recognition procedure and return to the prior interface screen that the user was utilizing. In some implementations, the user may be provided with information about products, user settings, merchants, offers, etc. in list form, such as through soft "Lists" button 309 so that the user may better understand the user's purchasing options. Various other features may be provided for in the app, such as through a "More" soft button 310.

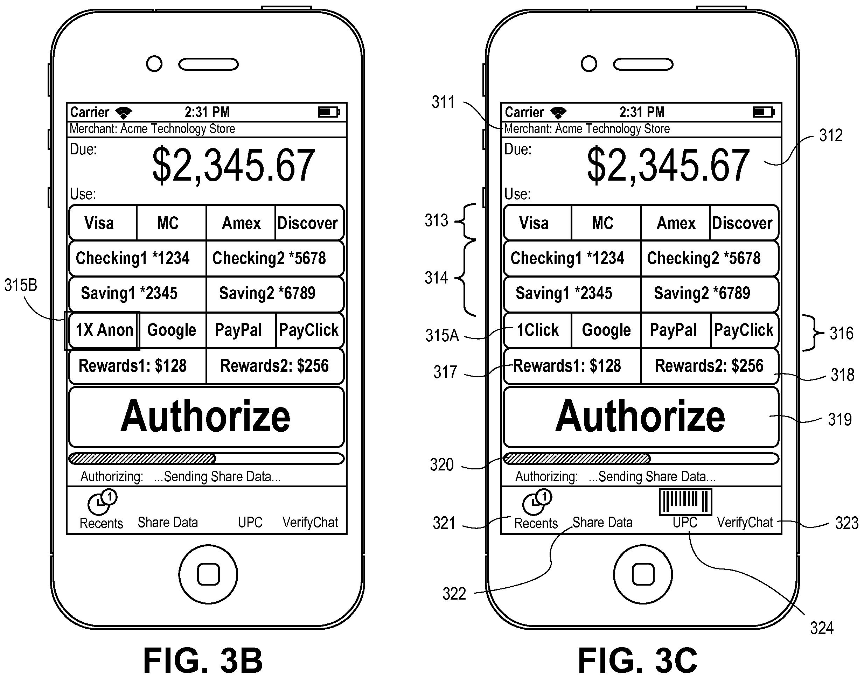

In some implementations, the app executing on the client device of the user may include an app interface providing various features for the user. In some implementations, the app may include an indication of the location (e.g., name of the merchant store 311 (see FIG. 3C), geographical location/coordinate, information about the aisle within the merchant store, etc.) of the user. The app may provide an indication of a pay amount due 312 for the purchase of the product. In some implementations, the app may provide various options for the user to pay the amount for purchasing the product(s). For example, the app may utilize the GPS coordinates to determine the merchant store within which the user is present and direct the user to a website of the merchant.

The authorization interface in FIG. 3C requires only one tap from a user in order to initiate the payment transaction with the default payment account, Visa. One tap-or slide, push, or other selection-allows a user to efficiently purchase the item through a payment account and move on to the next item or leave the store.

In the prior art, a consumer would be expected to purchase multiple items from a store all at once. There would be only one credit card or other monetary transaction. In an embodiment, each item can be purchased within a store individually, resulting in multiple credit card transactions. Although this may cost more in the way of transaction fees, it can be worthwhile to a store and to a customer for the convenience, goodwill, and extra data on the order of purchases that the store obtains.

In some implementations, the system may provide an application programming interface (API) for participating merchants directly to facilitate transaction processing. In some implementations, a merchant-branded application is developed with the described functionality, which may directly connect the user into the merchant's transaction processing system. For example, the user may choose from a number of cards (e.g., credit cards, debit cards, prepaid cards) from various card providers, e.g., 313. In some implementations, the app may provide the user the option to pay the purchase amount using funds included in a bank account of the user, e.g., a checking, savings, money market, current account, in account section 314. In some implementations, the user may have set default options for which card, bank account, etc. to use for the purchase transactions via the app. In some implementations, such setting of default options may allow the user to initiate the purchase transaction via a single click, tap, swipe, and/or other remedial user input action. Such an interface can be armed by interface element 315. In some implementations, when the user utilizes such an option, the app may utilize the default settings of the user to initiate the purchase transaction. In some implementations, the app may allow the user to utilize other accounts (e.g., Google™ Checkout, Paypal™ account) to pay for the purchase transaction, for example, in other account section 316. In some implementations, the app may allow the user to utilize rewards points, airline miles, hotel points, electronic coupons, printed coupons (e.g., by capturing the printed coupons similar to the product identifier) etc., to pay for the purchase transaction, such as in sections 317 and 318 of the interface. In some implementations, the app may provide an option to provide express authorization before initiating the purchase transaction through interface element 319. By pressing interface element 319, a consumer indicates consent to purchase the appropriate product(s). In some implementations, the app may provide an indication on the progress of the transaction after the user has selected an option to initiate the purchase transaction, such as progress indicator 320. In some implementations, the app may provide the user with historical information on the user's prior purchases via the app, such as through button 321. In some implementations, the app may provide the user with an option to share information about the purchase (e.g., via email, SMS, wall posting on Facebook®, tweet on Twitter™, etc.) with other users, such as through interface element 322. In some implementations the app may provide the user an option to display the product identification information captured by the client device (e.g., in order to show a customer service representative at the exit of a store the product information), such as displayed UPC barcode 324. In some implementations, the user, app, client device and or system may encounter an error in the processing or need further verification. In such scenarios, the user may be able to chat with a customer service representative, such as through VerifyChat button 323, in order to resolve the difficulties in the purchase transaction procedure.

In some implementations, the "VerifyChat" feature may be utilized for fraud prevention. For example, a server may detect an unusual and/or suspicious transaction. A transaction may have an associated risk score that is calculated given numerous input parameters, such as a price of the potential purchase items. If the risk score is above (or below) a threshold value, then a VerifyChat video conference may be required to continue.

A "risk score" can include a numerical probability of an event occurring. For example, a risk score of 0.191 can indicate that there is a 0.191 probability that a potential transaction is fraudulent. A risk score can also include an ordinal determination of the most likely events to occur. For example, a risk score of 'A' can be selected from a set {A, B, C} in which 'A' is more likely to occur than 'B,' and 'B' is more likely to occur than 'C.' A risk score can include other scoring mechanisms for risks or as otherwise known in the art.

A "threshold value" can include a cardinal or ordinal value that delineates values that are above and below the threshold value. For example, a threshold value of 0.190 may indicate a predetermined probability that above which a transaction should be halted because a risk is too great.

A "video chat session" includes a two-way, interactive live communication stream in which images from at least one camera on one device are sent for display to an opposite end of the communication path in order to be displayed. A video chat session can include video that is transmitted only in one direction but with live communication, such as audio voice or text messaging, capable of being sent in both directions.

FIG. 3D shows an interface in which a user can initiate the video chat session by pressing interface element 350 or decline by pressing cancel button 329. A live stream video 328b of the awaiting customer service representative is shown in window 328b. If the video chat is declined by pressing button 329, the user may need to bring his or her purchase to an associate located in the store, such as a cashier, in order to complete the purchase transaction. If accepted, the video chat conference can let a customer service associate, located remotely in a call center, simply verify that the user is not an automated "bot." Having a real-time, interactive video chat can be an extremely quick and effective means to verify that a user is not an automated bot. Additionally, the customer service representative can ask questions of the user and verify the authenticity of the originator of the purchase transaction. In various implementations, the server may send electronic mail message, text (SMS) messages, Facebook® messages, Twitter™ tweets, text chat, voice chat, video chat (e.g., Apple FaceTime), and/or the like as a message with the interface element to initiate the video chat session between the user and the customer service representative.

A live video 328a of the user may be shown on the display of the mobile device so that the user can see what the agent sees. In video chat session 326, customer service representative, shown in window 328b, may manually determine the authenticity of the user using the video of the user. In some implementations, the server may utilize face, biometric and/or like recognition (e.g., using pattern classification techniques) to determine the identity of the user, e.g., 328a. In some implementations, the app may provide reference marker 327 (e.g., cross-hairs, target box), so that the user may focus the video to facilitate an automated recognition of the user.

Simply opening the video chat session may demonstrate enough of a commitment to the transaction to lower a fraud risk score. When "Video Chat" button 350 is pressed, a message is sent from the mobile device to a cellular telephone station, where the message is forwarded through the Internet to the merchant's web server. The web server opens a new port of communication between a video conferencing server and the mobile device so that live video of the customer service representative and the user of the mobile device can be exchanged with one another. A portion of the message indicates that the video chat session was accepted, and that portion is forwarded to a fraud determination engine. The fact that a video chat was accepted by the recipient on the phone can be used to adjust the initial fraud score so that a second fraud risk score is calculated.

It is possible that a customer service representative does not have time to actually go through with the meeting, so the second fraud risk score can be used to evaluate whether to go forward with the transaction. If the initial fraud risk score is on the margin, then the re-calculated risk score, using the fact that a video chat session was accepted, may show that the risk of the transaction to the merchant is now within acceptable limits. If so, the purchase may be concluded and an electronic receipt for the transaction automatically sent to the mobile device so that its handler can walk out of the store with the product.

In some implementations, an authentic consumer may not have initiated the transaction. In such implementations, the user may cancel the challenge using cancel button 329. The server may then cancel the transaction, and/or initiate fraud investigation procedures on behalf of the user.

In some implementations, the user may select to conduct the transaction using a one-time anonymized credit card number through selection 315b (see FIG. 3B) in an authorization interface as shown. In such implementations, the app may automatically set the user profile settings such that the any personal identifying information of the user will not be provided to the merchant and/or other entities. In one embodiment, the user may be required to enter a user name and password to enable the one-time anonymization feature.

The app in the mobile device may be configured such that the authorization interface may be automatically initiated, without intervening human intervention, upon scanning or otherwise capturing the product identifier.

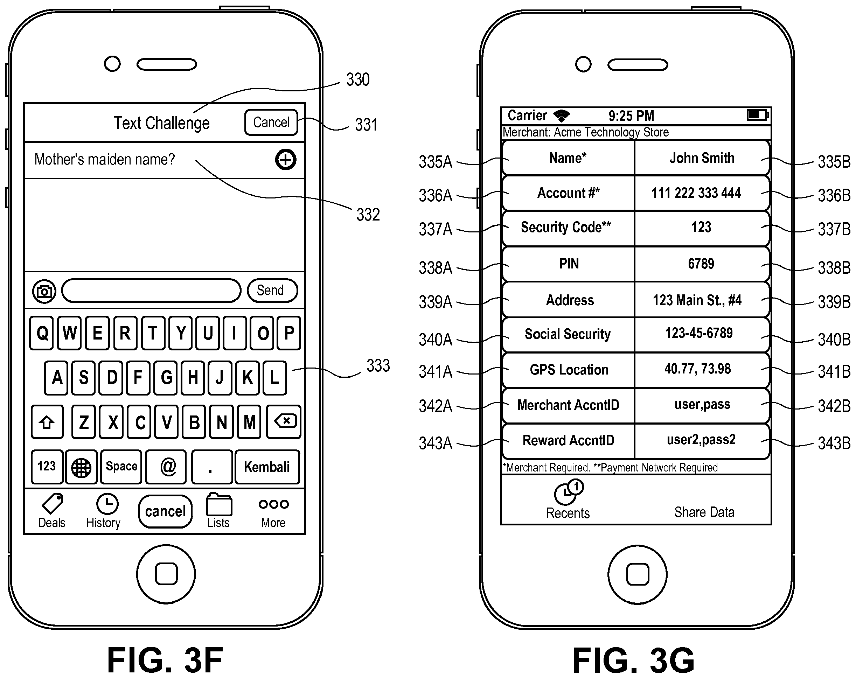

In some implementations, a server may utilize text challenge procedure 330 (see FIG. 3F) to verify the authenticity of the user. For example, the server may communicate with the user via text chat, SMS messages, electronic mail, Facebook® messages, Twitter™ tweets, and/or the like. The server may pose challenge question 332 to the user. The app may provide a user input interface element(s) (e.g., virtual keyboard 333) to answer the challenge question posed. In some implementations, the challenge question may randomly selected by the server automatically; in some implementations, a customer service representative may manually communicate with the user.

In some implementations, a genuine user may not have initiated the transaction, e.g., the transaction is fraudulent. In such implementations, the user may cancel, e.g., 331, the text challenge. The server may then cancel the transaction and/or initiate fraud investigation procedures on behalf of the user.

In some implementations, the user may be able to view and/or modify the user profile and/or settings of the user, e.g., by activating user interface element 309 (see FIG. 3A). In the interface screen of FIG. 3G, a user may be able to view/modify a user name (e.g., 335a-b), account number (e.g., 336a-b), user security access code (e.g., 337a-b), user personal identification number (PIN) (e.g., 338a-b), user address (e.g., 339a-b), social security number associated with the user (e.g., 340a-b), current device GPS location (e.g., 341a-b), user account of the merchant in whose store the user currently is (e.g., 342a-b), the user's rewards accounts (e.g., 343a-b), and/or the like. In some implementations, the user may be able to select which of the data fields and their associated values or defaults should be transmitted to facilitate the purchase transaction. In the exemplary embodiment of FIG. 3G, the user has selected the name 335a, account number 336a, security code 337a, merchant account ID 342a and rewards account ID 343a as the fields to be sent as part of the notification to process the purchase transaction. In some implementations, the user may toggle the fields and/or data values that are sent as part of the notification to process the purchase transactions. A user can specify a default payment account that he or she would like to use for every purchase with his or her e-wallet.

In some implementations, the app may provide multiple screens of data fields and/or associated values stored for the user to select as part of the purchase order transmission. In some implementations, the app may provide the server with the GPS location of the user. Based on the GPS location of the user, the IPOT may determine the context of the user (e.g., whether the user is in a store, doctor's office, hospital, postal service office, etc.). Based on the context, the user app may present the appropriate fields to the user, from which the user may select fields and/or field values to send as part of the purchase order transmission

For example, a user may go to doctor's office and desire to pay the co-pay for doctor's appointment. In addition to basic transactional information such as account number and name, the app may provide the user the ability to select to transfer medical records, health information, which may be provided to the medical provider, insurance company, as well as the transaction processor to reconcile payments between the parties. In some implementations, the records may be sent in a Health Insurance Portability and Accountability Act (HIPAA)-compliant data format and encrypted, and only the recipients who are authorized to view such records may have appropriate decryption keys to decrypt and view the private user information.

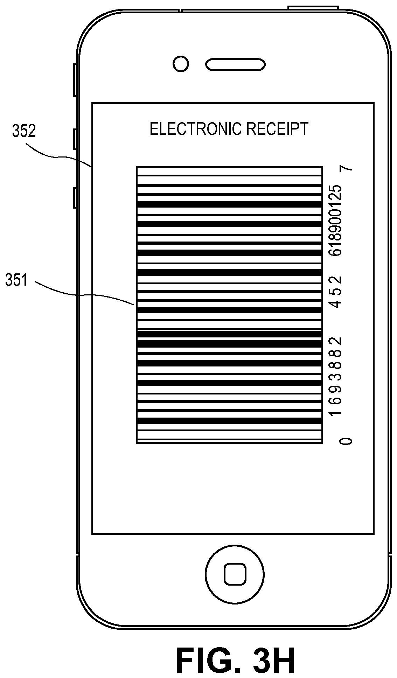

FIG. 3H illustrates an electronic receipt having a merchant verifiable code displayed on a mobile device. Electronic receipt 352 includes verifiable code 351, which is a barcode. At an exit to the store, the electronic receipt with verifiable code 351 can be shown on the display and passed near a camera or other reader that can read the barcode. A server can verify that the barcode is valid (e.g., that a purchase was made in the last ½, 1, 2, 3, 4, 5, 6, 7, 8 or more hours and that the electronic receipt associated with the barcode properly accounts for the purchase). The server can send an indication in a message that the verifiable code is valid to a theft prevention device. The indication can disarm an otherwise active alarm so that the consumer can exit the store with the product unimpeded. The indication can also indicate to a guard, open a gate, or otherwise facilitate the consumer's exit from the store.

In an alternative embodiment, the mobile device itself may have the capability to disarm anti-theft tags, or the user may be directed to a kiosk that can disarm the anti-theft tag. Based on checking the valid purchase, a signal can be sent to the device or kiosk to disarm the anti-theft tag.

An "electronic receipt" includes any receipt that is storable in volatile or nonvolatile digital memory or otherwise on an electronic device, or as otherwise known in the art. An electronic receipt may or may not include machine-readable images, such as a barcode.

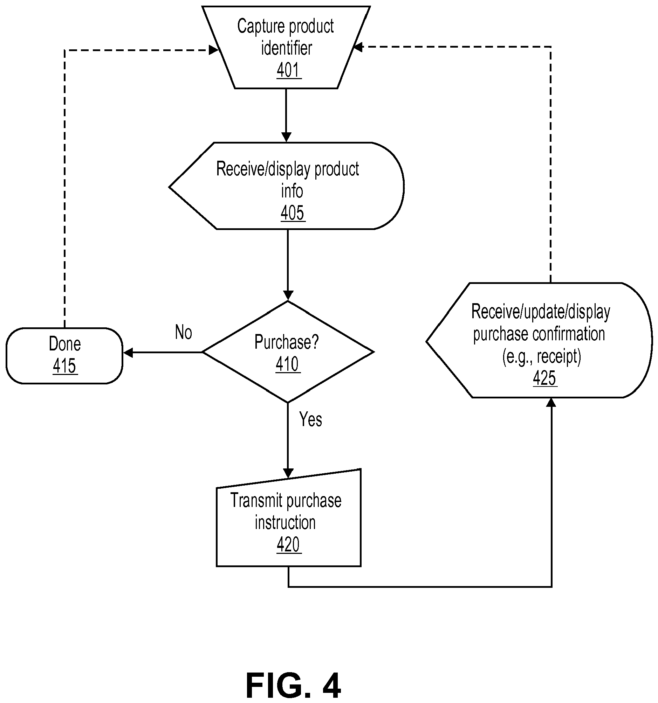

FIG. 4 shows a logic flow diagram illustrating example aspects of conducting a mobile product purchase transaction in some embodiments. In some implementations, the system may capture a product identifier, e.g., 401. The system may obtain product information about the product, and display the product information for the user. The system may provide the user an option to purchase the product based on one or more of the offers the system provides to the user. If the user chooses to purchase the product, e.g., 410, the system may transmit purchase instructions, e.g., 420, to other component and/or entities (e.g., merchant, card issuer, merchant's acquirer, and/or the like). In some implementations, the system may obtain (an updated, e.g., if the user is modifying a prior purchase) purchase confirmation receipt, e.g., 425, and may display the obtained purchase confirmation receipt for the user.

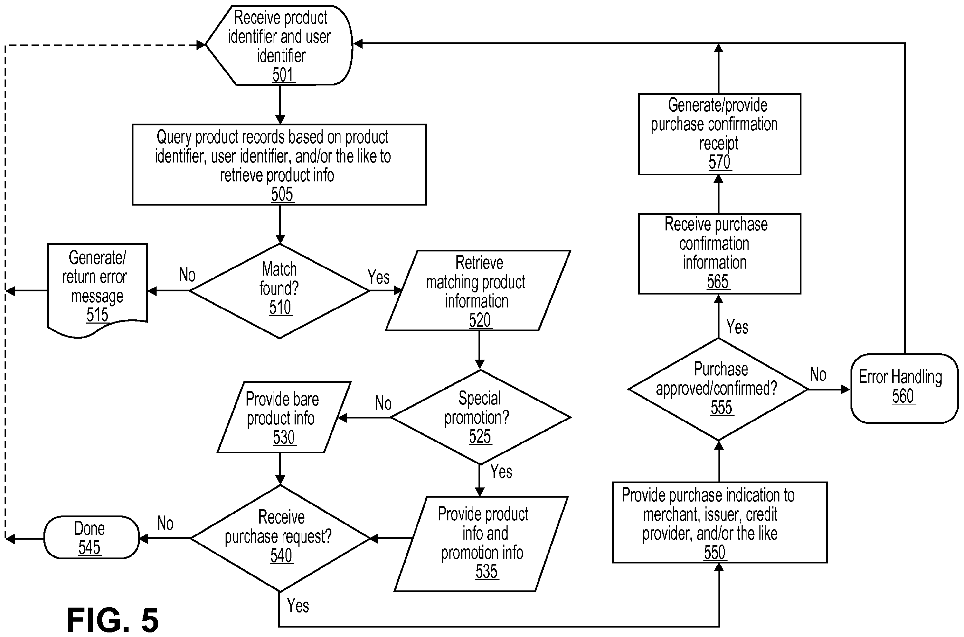

FIG. 5 shows a logic flow diagram illustrating example aspects of selecting purchase options for a mobile product purchase transaction. In some implementations, the system may obtain a product identifier from a client device, as well as client and/or user identifiers, e.g., 501. The system may query a product records database for product information based on the product identifier and/or the client identifier and/or the user identifier, e.g., 505. If the system does not find a match for the product in the database, e.g., 510, option "No," the system may generate and return an error message and initiate error handling procedures, e.g., 515. If the system finds a match, e.g., 510, option "Yes," for the product in the product records database, the system may obtain product information corresponding to the product from the database, e.g., 520. The system may determine, based on the information obtained from the database, whether any special promotions are available for the product, e.g., 525. If there are no special promotions available, e.g., 525, option "No," the system may provide the bare product information for the user, e.g., 530. If there are special promotions available, e.g., 525, option "Yes," the system may provide the product information as well as the promotional information for the user, e.g., 535. In some implementations, the system may obtain a purchase request from the user. If the system obtains a purchase request from the user, e.g., 540, option "Yes," the system may provide a purchase indication to a merchant, issuing bank, acquirer bank and/or other entities for processing of the purchase transaction. The system may obtain a notification from the entities to which the system provided the purchase indication regarding the purchase. If the purchase is not approved, e.g., 555, option "No," the system may initiate error handling procedures, e.g., 560. If the purchase is approved, e.g., 555, option "Yes," the system may obtain the purchase confirmation information, e.g., 565, generate a purchase confirmation receipt, e.g., 570, and provide the purchase confirmation receipt for the user.

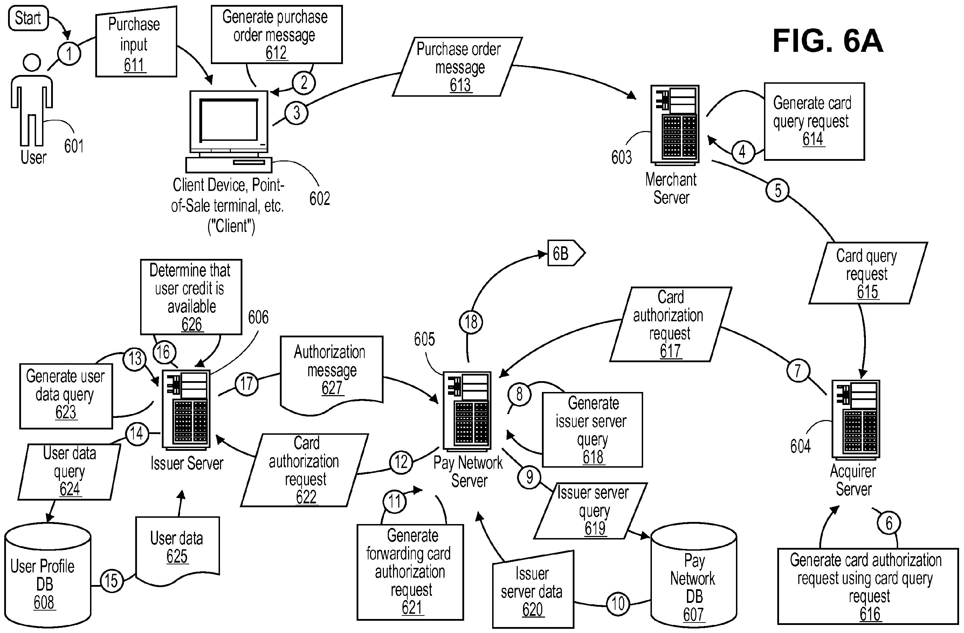

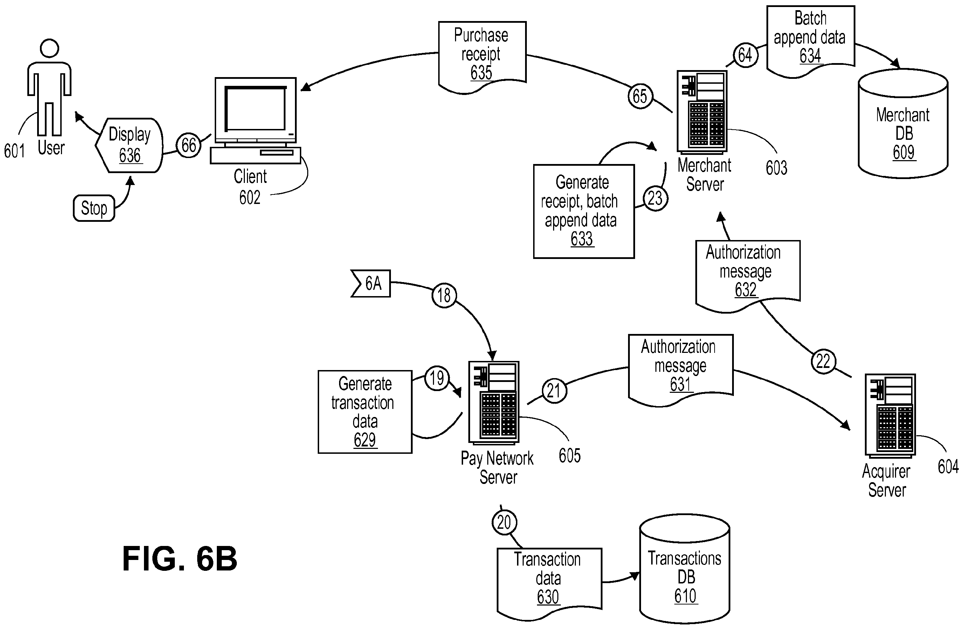

FIGS. 6A-6C are data flow diagrams illustrating an example procedure to execute a card-based transaction resulting in raw card-based transaction data. In some implementations, a user, e.g., 601, may desire to purchase a product, service, offering, and/or the like ("product"), from a merchant. The user may communicate with a merchant server, e.g., 603, via a client such as, but not limited to: a personal computer, mobile device, television, point-of-sale terminal, kiosk, ATM, and/or the like (e.g., 602). For example, the user may provide user input, e.g., purchase input 611, into the client indicating the user's desire to purchase the product. In various implementations, the user input may include, but not be limited to: keyboard entry, card swipe, activating a radio frequency identification (RFID) or near field communication (NFC) enabled hardware device (e.g., electronic card having multiple accounts, smartphone, tablet), mouse clicks, depressing buttons on a joystick/game console, voice commands, single/multi-touch gestures on a touch-sensitive interface, touching user interface elements on a touch-sensitive display, and/or the like. For example, the user may direct a browser application executing on the client device to a website of the merchant, and may select a product from the website via clicking on a hyperlink presented to the user via the website.

As another example, the client may obtain track 1 data from the user's card (e.g., credit card, debit card, prepaid card, charge card), such as the example track 1 data provided below:
%B123456789012345^PUBLIC/J.Q.^99011200000000000000**901******?* (wherein '123456789012345' is the card number of 'J.Q. Public' and has a CVV number of 901. '990112' is a service code, and *** represents decimal digits which change randomly each time the card is used.)

In some implementations, the client may generate a purchase order message, e.g., 612, and provide, e.g., 613, the generated purchase order message to the merchant server. For example, a browser application executing on the client may provide, on behalf of the user, a (Secure) Hypertext Transfer Protocol ("HTTP(S)") GET message including the product order details for the merchant server in the form of data formatted according to the eXtensible Markup Language ("XML").

In some implementations, the merchant server may obtain the purchase order message from the client and may parse the purchase order message to extract details of the purchase order from the user. The merchant server may generate a card query request, e.g., 614 to determine whether the transaction can be processed. For example, the merchant server may attempt to determine whether the user has sufficient funds to pay for the purchase in a card account provided with the purchase order. The merchant server may provide the generated card query request, e.g., 615, to an acquirer server, e.g., 604. For example, the acquirer server may be a server of an acquirer financial institution ("acquirer") maintaining an account of the merchant. For example, the proceeds of transactions processed by the merchant may be deposited into an account maintained by the acquirer. In some implementations, the card query request may include details such as, but not limited to: the costs to the user involved in the transaction, card account details of the user, user billing and/or shipping information, and/or the like. For example, the merchant server may provide a HTTP(S) POST message including an XML-formatted card query request.

In some implementations, the acquirer server may generate a card authorization request, e.g., 616, using the obtained card query request, and provide the card authorization request, e.g., 617, to a pay network server, e.g., 605. For example, the acquirer server may redirect a HTTP(S) POST message from the merchant server to the pay network server.

At this point, pay network server may determine an offer for using a different payment account associated with the consumer than that specified in card authorization request 617. For example, an automated auction may be held between different card issuers of cards in the user's e-wallet. The auction may pick the top 1, 2, 3, or more card issuers for deals that they may wish to present to the user. Alternatively, pay network server may simply look up which card issuers have outstanding deals/offers that could apply to the purchase. For example, if the user is about to purchase flowers (as determined through the product identifier), then a particular card issuer who offers cash back or extra loyalty points for such purchases may be selected.

The offer can then be sent to the consumer through the app, via an SMS message, etc. If the consumer selects the offer, then the payment network server may reformat, repackage, construct-anew, or otherwise revise the authorization request and send it to the 'winning' issuer.

In another embodiment competing offers and/or other merchants can participate in an automated auction for the user's business. An offer for a competing item to the item identified by the product identifier, or a second merchant selling the same item or the competing item, is sent to user 601 via the app, SMS text message, etc. If the offer is selected by the user, then pay network server 605 cancels the original authorization message and generates a new authorization message for a purchase of the new item. Because card authorization request 617 may not have the product information within it, the product to be purchased may be sent separately in a different message, and the message and card authorization request 617 can be matched.

In some implementations, the pay network server may obtain the card authorization request from the acquirer server and may parse the card authorization request to extract details of the request. Using the extracted fields and field values, the pay network server may generate a query, e.g., 618, for an issuer server corresponding to the user's card account. For example, the user's card account, the details of which the user may have provided via the client-generated purchase order message, may be linked to an issuer financial institution ("issuer"), such as a banking institution, which issued the card account for the user. An issuer server, e.g., 606, of the issuer may maintain details of the user's card account. In some implementations, a database, e.g., pay network database 607, may store details of the issuer servers and card account numbers associated with the issuer servers. For example, the database may be a relational database responsive to Structured Query Language ("SQL") commands. The pay network server may execute a hypertext preprocessor ("PHP") script including SQL commands to query the database for details of the issuer server.

In response to obtaining the issuer server query, e.g., 619, the pay network database may provide, e.g., 620, the requested issuer server data to the pay network server. In some implementations, the pay network server may utilize the issuer server data to generate a forwarding card authorization request, e.g., 621, to redirect the card authorization request from the acquirer server to the issuer server. The pay network server may provide the card authorization request, e.g., 622, to the issuer server. In some implementations, the issuer server, e.g., 606, may parse the card authorization request and, based on the request details, may query a database, e.g., user profile database 608, for data of the user's card account. For example, the issuer server may issue PHP/SQL commands.

In some implementations, on obtaining the user data, e.g., 625, the issuer server may determine whether the user can pay for the transaction using funds available in the account, e.g., 626. For example, the issuer server may determine whether the user has a sufficient balance remaining in the account, sufficient credit associated with the account, and/or the like. If the issuer server determines that the user can pay for the transaction using the funds available in the account, the server may provide an authorization message, e.g., 627, to the pay network server. For example, the server may provide a HTTP(S) POST message.

In some implementations, the pay network server may obtain the authorization message and parse the message to extract authorization details. Upon determining that the user possesses sufficient funds for the transaction, the pay network server may generate a transaction data record, e.g., 629, from the card authorization request it received, and store, e.g., 630, the details of the transaction and authorization relating to the transaction in a database, e.g., transactions database 610. For example, the pay network server may issue PHP/SQL commands.

In some implementations, the pay network server may forward the authorization message, e.g., 631, to the acquirer server, which may in turn forward the authorization message, e.g., 632, to the merchant server. The merchant may obtain the authorization message, and determine from it that the user possesses sufficient funds in the card account to conduct the transaction. The merchant server may add a record of the transaction for the user to a batch of transaction data relating to authorized transactions. For example, the merchant may append the XML data pertaining to the user transaction to an XML data file comprising XML data for transactions that have been authorized for various users, e.g., 633, and store the XML data file, e.g., 634, in a database, e.g., merchant database 609.

In some implementations, the server may also generate a purchase receipt, e.g., 633, and provide the purchase receipt to the client. The client may render and display, e.g., 636, the purchase receipt for the user. For example, the client may render a webpage, electronic message, text / SMS message, buffer a voicemail, emit a ring tone, and/or play an audio message, etc., and provide output including, but not limited to: sounds, music, audio, video, images, tactile feedback, vibration alerts (e.g., on vibration-capable client devices such as a smartphone etc.), and/or the like.

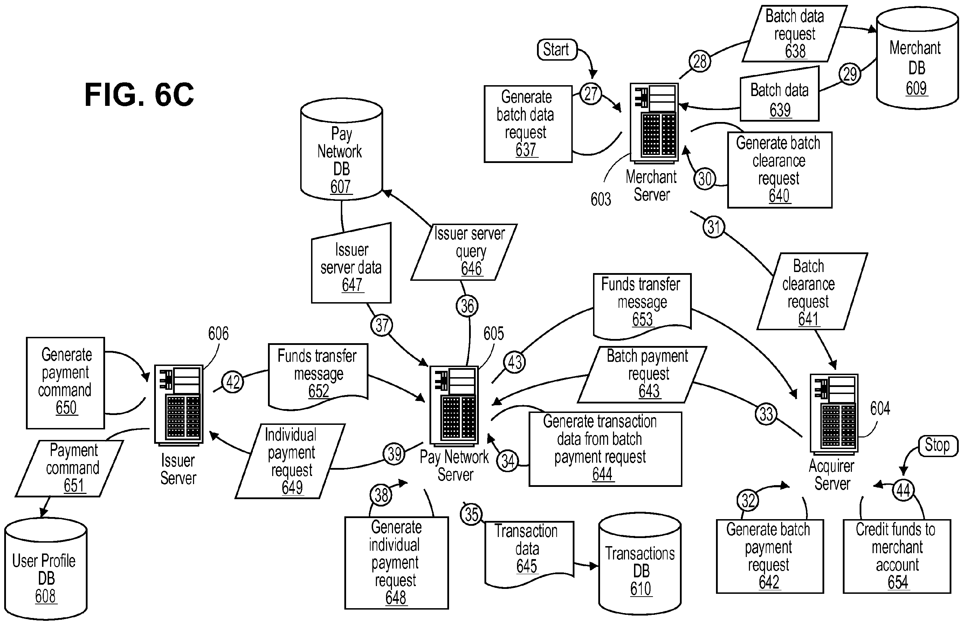

With reference to FIG. 6C, in some implementations, the merchant server may initiate clearance of a batch of authorized transactions. For example, the merchant server may generate a batch data request, e.g., 637, and provide the request, e.g., 638, to a database, e.g., merchant database 609. For example, the merchant server may utilize PHP/SQL commands to query a relational database. In response to the batch data request, the database may provide the requested batch data, e.g., 639. The server may generate a batch clearance request, e.g., 640, using the batch data obtained from the database, and provide, e.g., 641, the batch clearance request to an acquirer server, e.g., 604. For example, the merchant server may provide a HTTP(S) POST message including XML-formatted batch data in the message body for the acquirer server. The acquirer server may generate, e.g., 642, a batch payment request using the obtained batch clearance request, and provide the batch payment request to the pay network server, e.g., 643. The pay network server may parse the batch payment request, and extract the transaction data for each transaction stored in the batch payment request, e.g., 644. The pay network server may store the transaction data, e.g., 645, for each transaction in a database, e.g., transactions database 610. For each extracted transaction, the pay network server may query, e.g., 646, a database, e.g., pay network database 607, for an address of an issuer server. For example, the pay network server may utilize PHP/SQL commands. The pay network server may generate an individual payment request, e.g., 648, for each transaction for which it has extracted transaction data, and provide the individual payment request, e.g., 649, to the issuer server, e.g., 606. For example, the pay network server may provide a HTTP(S) POST request

In some implementations, the issuer server may generate a payment command, e.g., 650. For example, the issuer server may issue a command to deduct funds from the user's account (or add a charge to the user's credit card account). The issuer server may issue a payment command, e.g., 651, to a database storing the user's account information, e.g., user profile database 608. The issuer server may provide a funds transfer message, e.g., 652, to the pay network server, which may forward, e.g., 653, the funds transfer message to the acquirer server.

In some implementations, the acquirer server may parse the funds transfer message, and correlate the transaction (e.g., using a request_ID field) to the merchant. The acquirer server may then transfer the funds specified in the funds transfer message to an account of the merchant, e.g., 654.

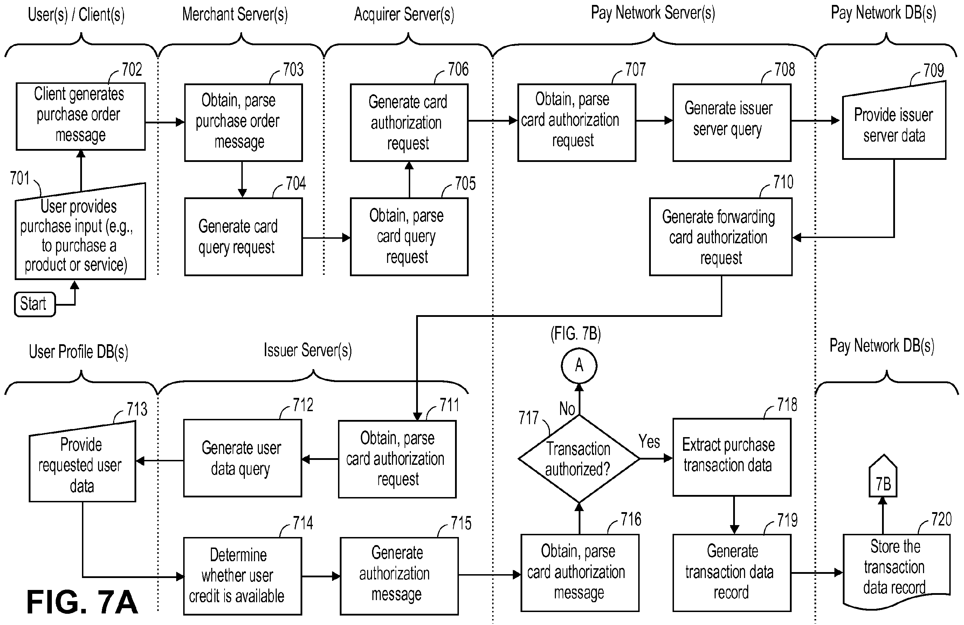

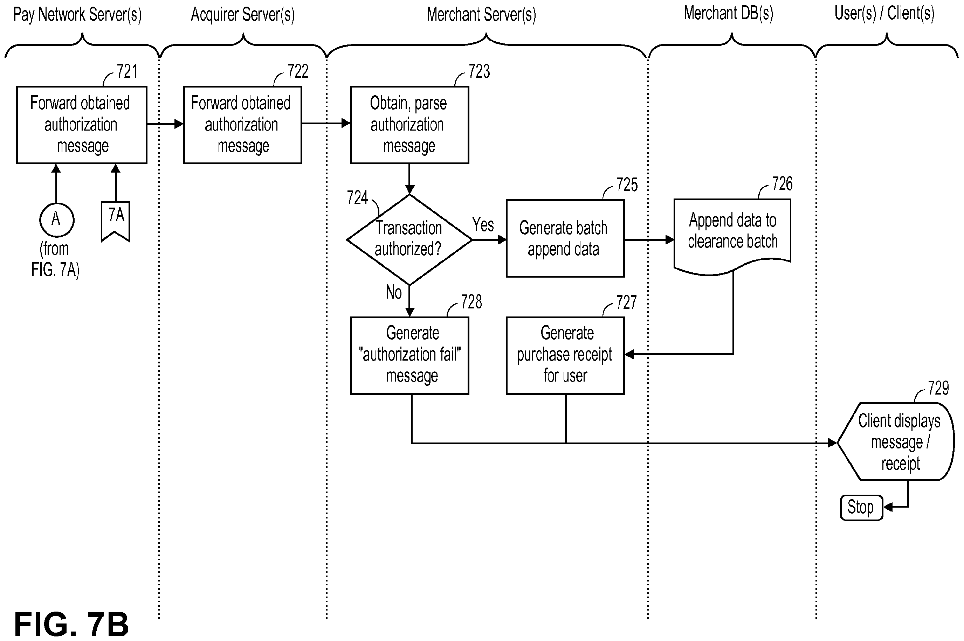

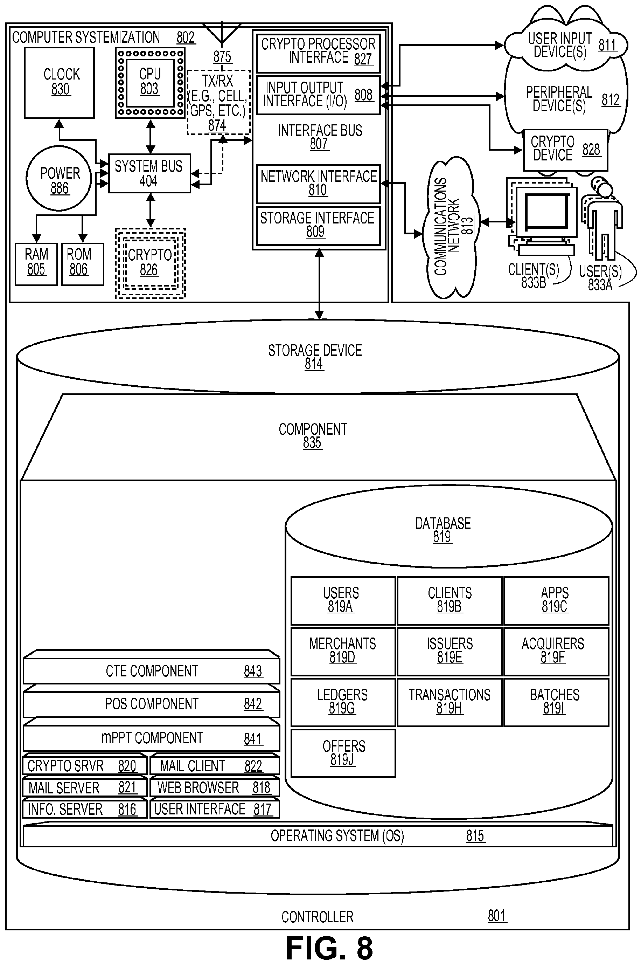

FIGS. 7A-7D are logic flow diagrams illustrating example aspects of executing a card-based transaction resulting in generation of raw card-based transaction data in some embodiments of the system. In some implementations, a user may provide user input, e.g., 701, into a client indicating the user's desire to purchase a product from a merchant. The client may generate a purchase order message, e.g., 702, and provide the generated purchase order message to the merchant server. In some implementations, the merchant server may obtain, e.g., 703, the purchase order message from the client, and may parse the purchase order message to extract details of the purchase order from the user. Example parsers that the merchant client may utilize are discussed further below with reference to FIG. 8. The merchant server may generate a card query request, e.g., 704, to determine whether the transaction can be processed. For example, the merchant server may process the transaction only if the user has sufficient funds to pay for the purchase in a card account provided with the purchase order. The merchant server may provide the generated card query request to an acquirer server. The acquirer server may generate a card authorization request, e.g., 706, using the obtained card query request, and provide the card authorization request to a pay network server. In some implementations, the pay network server may obtain the card authorization request from the acquirer server, and may parse the card authorization request to extract details of the request. Using the extracted fields and field values, the pay network server may generate a query, e.g., 708, for an issuer server corresponding to the user's card account. In response to obtaining the issuer server query the pay network database may provide, e.g., 709, the requested issuer server data to the pay network server. In some implementations, the pay network server may utilize the issuer server data to generate a forwarding card authorization request, e.g., 710, to redirect the card authorization request from the acquirer server to the issuer server. The pay network server may provide the card authorization request to the issuer server. In some implementations, the issuer server may parse, e.g., 711, the card authorization request, and based on the request details may query a database, e.g., 712, for data of the user's card account. In response, the database may provide the requested user data. On obtaining the user data, the issuer server may determine whether the user can pay for the transaction using funds available in the account, e.g., 714. For example, the issuer server may determine whether the user has a sufficient balance remaining in the account, sufficient credit associated with the account, and/or the like, but comparing the data from the database with the transaction cost obtained from the card authorization request. If the issuer server determines that the user can pay for the transaction using the funds available in the account, the server may provide an authorization message, e.g., 715, to the pay network server.

In some implementations, the pay network server may obtain the authorization message and parse the message to extract authorization details. Upon determining that the user possesses sufficient funds for the transaction (e.g., 717, option "Yes"), the pay network server may extract the transaction card from the authorization message and/or card authorization request, e.g., 718, and generate a transaction data record, e.g., 719, using the card transaction details. The pay network server may provide the transaction data record for storage, e.g., 720, to a database. In some implementations, the pay network server may forward the authorization message, e.g., 721, to the acquirer server, which may in turn forward the authorization message, e.g., 722, to the merchant server. The merchant may obtain the authorization message, and parse the authorization message to extract its contents, e.g., 723. The merchant server may determine whether the user possesses sufficient funds in the card account to conduct the transaction. If the merchant server determines that the user possess sufficient funds, e.g., 724, option "Yes," the merchant server may add the record of the transaction for the user to a batch of transaction data relating to authorized transactions, e.g., 725. The merchant server may also generate a purchase receipt, e.g., 727, for the user. If the merchant server determines that the user does not possess sufficient funds, e.g., 724, option "No," then the merchant server may generate an "authorization fail" message, e.g., 728. The merchant server may provide the purchase receipt or the "authorization fail" message to the client. The client may render and display, e.g., 729, the purchase receipt for the user.

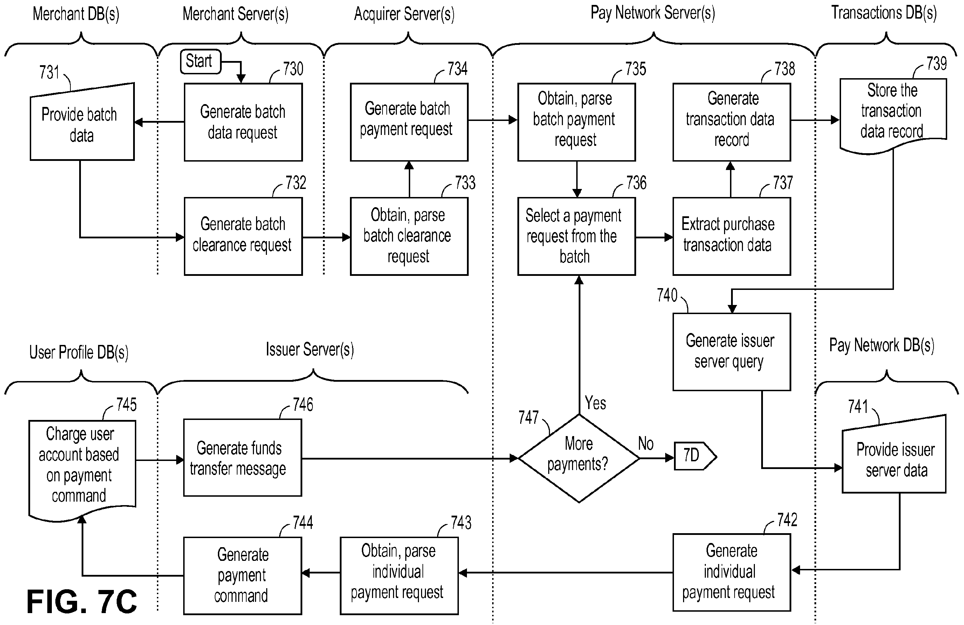

In some implementations, the merchant server may initiate clearance of a batch of authorized transactions by generating a batch data request, e.g., 730 (on FIG. 7C), and providing the request to a database. In response to the batch data request, the database may provide the requested batch data, e.g., 731, to the merchant server. The server may generate a batch clearance request, e.g., 732, using the batch data obtained from the database, and provide the batch clearance request to an acquirer server. The acquirer server may generate, e.g., 734, a batch payment request using the obtained batch clearance request, and provide the batch payment request to a pay network server. The pay network server may parse, e.g., 735, the batch payment request, select a transaction stored within the batch data, e.g., 736, and extract the transaction data for the transaction stored in the batch payment request, e.g., 737. The pay network server may generate a transaction data record, e.g., 738, and store the transaction data, e.g., 739, the transaction in a database. For the extracted transaction, the pay network server may generate an issuer server query, e.g., 740, for an address of an issuer server maintaining the account of the user requesting the transaction. The pay network server may provide the query to a database. In response, the database may provide the issuer server data requested by the pay network server, e.g., 741. The pay network server may generate an individual payment request, e.g., 742, for the transaction for which it has extracted transaction data, and provide the individual payment request to the issuer server using the issuer server data from the database.

In some implementations, the issuer server may obtain the individual payment request, and parse, e.g., 743, the individual payment request to extract details of the request. Based on the extracted data, the issuer server may generate a payment command, e.g., 744. For example, the issuer server may issue a command to deduct funds from the user's account (or add a charge to the user's credit card account). The issuer server may issue a payment command, e.g., 745, to a database storing the user's account information. In response, the database may update a data record corresponding to the user's account to reflect the debit / charge made to the user's account. The issuer server may provide a funds transfer message, e.g., 746, to the pay network server after the payment command has been executed by the database.

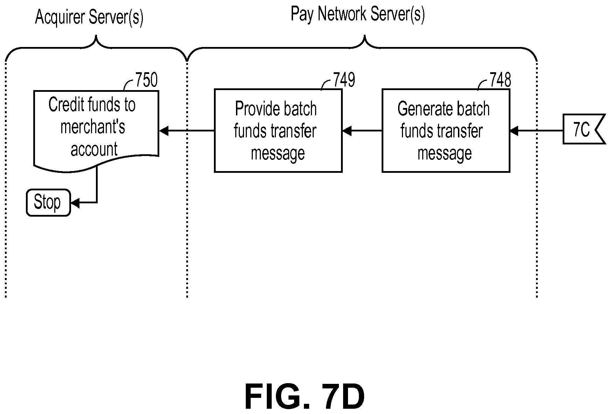

In some implementations, the pay network server may check whether there are additional transactions in the batch that need to be cleared and funded. If there are additional transactions, e.g., 747, option "Yes," the pay network server may process each transaction according to the procedure described above. The pay network server may generate, e.g., 748 (on FIG. 7D), an aggregated funds transfer message reflecting transfer of all transactions in the batch, and provide, e.g., 749, the funds transfer message to the acquirer server. The acquirer server may, in response, transfer the funds specified in the funds transfer message to an account of the merchant, e.g., 750.

### Controller

FIG. 8 illustrates inventive aspects of controller 801 in a block diagram. In this embodiment, controller 801 may serve to aggregate, process, store, search, serve, identify, instruct, generate, match, and/or facilitate interactions with a computer through various technologies, and/or other related data.

Typically, users, which may be people and/or other systems, may engage information technology systems (e.g., computers) to facilitate information processing. In turn, computers employ processors to process information; such processors 803 may be referred to as central processing units (CPU). One form of processor is referred to as a microprocessor. CPUs use communicative circuits to pass binary encoded signals acting as instructions to enable various operations. These instructions may be operational and/or data instructions containing and/or referencing other instructions and data in various processor accessible and operable areas of memory 829 (e.g., registers, cache memory, random access memory, etc.). Such communicative instructions may be stored and/or transmitted in batches (e.g., batches of instructions) as programs and/or data components to facilitate desired operations. These stored instruction codes, e.g., programs, may engage the CPU circuit components and other motherboard and/or system components to perform desired operations. One type of program is a computer operating system, which, may be executed by CPU on a computer; the operating system enables and facilitates users to access and operate computer information technology and resources. Some resources that may be employed in information technology systems include: input and output mechanisms through which data may pass into and out of a computer; memory storage into which data may be saved; and processors by which information may be processed. These information technology systems may be used to collect data for later retrieval, analysis, and manipulation, which may be facilitated through a database program. These information technology systems provide interfaces that allow users to access and operate various system components.

In one embodiment, controller 801 may be connected to and/or communicate with entities such as, but not limited to: one or more users from user input devices 811; peripheral devices 812; an optional cryptographic processor device 828; and/or a communications network 813. For example, controller 801 may be connected to and/or communicate with users operating client device(s) including, but not limited to, personal computer(s), server(s) and/or various mobile device(s) including, but not limited to, cellular telephone(s), smartphone(s) (e.g., iPhone®, Blackberry®, Android OS-based phones etc.), tablet computer(s) (e.g., Apple iPad™, HP Slate™, Motorola Xoom™, etc.), eBook reader(s) (e.g., Amazon Kindle™, Barnes and Noble's Nook™ eReader, etc.), laptop computer(s), notebook(s), netbook(s), gaming console(s) (e.g., XBOX Live™, Nintendo® DS, Sony PlayStation® Portable, etc.), portable scanner(s) and/or the like.

Networks are commonly thought to comprise the interconnection and interoperation of clients, servers, and intermediary nodes in a graph topology. It should be noted that the term "server" as used throughout this application refers generally to a computer, other device, program, or combination thereof that processes and responds to the requests of remote users across a communications network. Servers serve their information to requesting "clients." The term "client" as used herein refers generally to a computer, program, other device, user and/or combination thereof that is capable of processing and making requests and obtaining and processing any responses from servers across a communications network. A computer, other device, program, or combination thereof that facilitates, processes information and requests, and/or furthers the passage of information from a source user to a destination user is commonly referred to as a "node." Networks are generally thought to facilitate the transfer of information from source points to destinations. A node specifically tasked with furthering the passage of information from a source to a destination is commonly called a "router." There are many forms of networks such as Local Area Networks (LANs), Pico networks, Wide Area Networks (WANs), Wireless Networks (WLANs), etc. For example, the Internet is generally accepted as being an interconnection of a multitude of networks whereby remote clients and servers may access and interoperate with one another.

Controller 801 may be based on computer systems that may comprise, but are not limited to, components such as: a computer systemization 802 connected to memory 829.

### Computer Systemization

A computer systemization 802 may comprise a clock 830, central processing unit ("CPU(s)" and/or "processor(s)" (these terms are used interchangeable throughout the disclosure unless noted to the contrary)) 803, a memory 829 (e.g., a read only memory (ROM) 806, a random access memory (RAM) 805, etc.), and/or an interface bus 807, and most frequently, although not necessarily, are all interconnected and/or communicating through a system bus 804 on one or more (mother)board(s) 802 having conductive and/or otherwise transportive circuit pathways through which instructions (e.g., binary encoded signals) may travel to effect communications, operations, storage, etc. Optionally, the computer systemization may be connected to an internal power source 886; e.g., optionally the power source may be internal. Optionally, a cryptographic processor 826 and/or transceivers (e.g., ICs) 874 may be connected to the system bus. In another embodiment, the cryptographic processor and/or transceivers may be connected as either internal and/or external peripheral devices 812 via the interface bus I/O. In turn, the transceivers may be connected to antenna(s) 875, thereby effectuating wireless transmission and reception of various communication and/or sensor protocols; for example the antenna(s) may connect to: a Texas Instruments WiLink WL1283 transceiver chip (e.g., providing 802.11n, Bluetooth 3.0, FM, global positioning system (GPS) (thereby allowing the controller to determine its location)); Broadcom BCM4329FKUBG transceiver chip (e.g., providing 802.11n, Bluetooth 2.1 + EDR, FM, etc.); a Broadcom BCM4750IUB8 receiver chip (e.g., GPS); an Infineon Technologies X-Gold 618-PMB9800 (e.g., providing 2G/3G HSDPA/HSUPA communications); and/or the like. The system clock typically has a crystal oscillator and generates a base signal through the computer systemization's circuit pathways. The clock is typically coupled to the system bus and various clock multipliers that will increase or decrease the base operating frequency for other components interconnected in the computer systemization. The clock and various components in a computer systemization drive signals embodying information throughout the system. Such transmission and reception of instructions embodying information throughout a computer systemization may be commonly referred to as communications. These communicative instructions may further be transmitted, received, and the cause of return and/or reply communications beyond the instant computer systemization to: communications networks, input devices, other computer systemizations, peripheral devices, and/or the like. Of course, any of the above components may be connected directly to one another, connected to the CPU, and/or organized in numerous variations employed as exemplified by various computer systems.

The CPU comprises at least one high-speed data processor adequate to execute program components for executing user and/or system-generated requests. Often, the processors themselves will incorporate various specialized processing units, such as, but not limited to: integrated system (bus) controllers, memory management control units, floating point units, and even specialized processing subunits like graphics processing units, digital signal processing units, and/or the like. Additionally, processors may include internal fast access addressable memory and be capable of mapping and addressing memory 529 beyond the processor itself; internal memory may include, but is not limited to: fast registers, various levels of cache memory (e.g., level 1, 2, 3, etc.), RAM, etc. The processor may access this memory through the use of a memory address space that is accessible via instruction address, which the processor can construct and decode allowing it to access a circuit path to a specific memory address space having a memory state. The CPU may be a microprocessor such as: AMD's Athlon, Duron and/or Opteron; ARM's application, embedded and secure processors; IBM and/or Motorola's DragonBall and PowerPC; IBM's and Sony's Cell processor; Intel's Celeron, Core (2) Duo, Itanium, Pentium, Xeon, and/or XScale; and/or the like processor(s). The CPU interacts with memory through instruction passing through conductive and/or transportive conduits (e.g., (printed) electronic and/or optic circuits) to execute stored instructions (i.e., program code) according to conventional data processing techniques. Such instruction passing facilitates communication within the controller and beyond through various interfaces. Should processing requirements dictate a greater amount speed and/or capacity, distributed processors (e.g., Distributed architecture), mainframe, multi-core, parallel, and/or super-computer architectures may similarly be employed. Alternatively, should deployment requirements dictate greater portability, smaller Personal Digital Assistants (PDAs) may be employed.

Depending on the particular implementation, features of the controller may be achieved by implementing a microcontroller such as CAST's R8051XC2 microcontroller; Intel's MCS 51 (i.e., 8051 microcontroller); and/or the like. Also, to implement certain features of the controller, some feature implementations may rely on embedded components, such as: Application-Specific Integrated Circuit ("ASIC"), Digital Signal Processing ("DSP"), Field Programmable Gate Array ("FPGA"), and/or the like embedded technology. For example, any of the controller component collection (distributed or otherwise) and/or features may be implemented via the microprocessor and/or via embedded components; e.g., via ASIC, coprocessor, DSP, FPGA, and/or the like. Alternately, some implementations of the controller may be implemented with embedded components that are configured and used to achieve a variety of features or signal processing.

Depending on the particular implementation, the embedded components may include software solutions, hardware solutions, and/or some combination of both hardware/software solutions. For example, controller features discussed herein may be achieved through implementing FPGAs, which are a semiconductor devices containing programmable logic components called "logic blocks", and programmable interconnects, such as the high performance FPGA Virtex series and/or the low cost Spartan series manufactured by Xilinx. Logic blocks and interconnects can be programmed by the customer or designer, after the FPGA is manufactured, to implement any of the controller's features. A hierarchy of programmable interconnects allow logic blocks to be interconnected as needed by the controller system designer/administrator, somewhat like a one-chip programmable breadboard. An FPGA's logic blocks can be programmed to perform the function of basic logic gates such as AND, and XOR, or more complex combinational functions such as decoders or simple mathematical functions. In most FPGAs, the logic blocks also include memory elements, which may be simple flip-flops or more complete blocks of memory. In some circumstances, the IPOT may be developed on regular FPGAs and then migrated into a fixed version that more resembles ASIC implementations. Alternate or coordinating implementations may migrate controller features to a final ASIC instead of or in addition to FPGAs. Depending on the implementation all of the aforementioned embedded components and microprocessors may be considered the "CPU" and/or "processor" for the controller.

### Power Source

The power source 886 may be of any standard form for powering small electronic circuit board devices such as the following power cells: alkaline, lithium hydride, lithium ion, lithium polymer, nickel cadmium, solar cells, and/or the like. Other types of AC or DC power sources may be used as well. In the case of solar cells, in one embodiment, the case provides an aperture through which the solar cell may capture photonic energy. The power cell 886 is connected to at least one of the interconnected subsequent components of the controller thereby providing an electric current to all subsequent components. In one example, the power source 886 is connected to the system bus component 804. In an alternative embodiment, an outside power source 886 is provided through a connection across the I/O 808 interface. For example, a USB and/or IEEE 1394 connection carries both data and power across the connection and is therefore a suitable source of power.

### Interface Adapters

Interface bus(ses) 807 may accept, connect, and/or communicate to a number of interface adapters, conventionally although not necessarily in the form of adapter cards, such as but not limited to: input output interfaces (I/O) 808, storage interfaces 809, network interfaces 810, and/or the like. Optionally, cryptographic processor interfaces 827 similarly may be connected to the interface bus. The interface bus provides for the communications of interface adapters with one another as well as with other components of the computer systemization. Interface adapters are adapted for a compatible interface bus. Interface adapters conventionally connect to the interface bus via a slot architecture. Conventional slot architectures may be employed, such as, but not limited to: Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and/or the like.

Storage interfaces 809 may accept, communicate, and/or connect to a number of storage devices such as, but not limited to: storage devices 814, removable disc devices, and/or the like. Storage interfaces may employ connection protocols such as, but not limited to: (Ultra) (Serial) Advanced Technology Attachment (Packet Interface) ((Ultra) (Serial) ATA(PI)), (Enhanced) Integrated Drive Electronics ((E)IDE), Institute of Electrical and Electronics Engineers (IEEE) 1394, fiber channel, Small Computer Systems Interface (SCSI), Universal Serial Bus (USB), and/or the like.

Network interfaces 810 may accept, communicate, and/or connect to a communications network 813. Through a communications network 813, the controller is accessible through remote clients 833b (e.g., computers with web browsers) by users 833a. Network interfaces may employ connection protocols such as, but not limited to: direct connect, Ethernet (thick, thin, twisted pair 10/100/1000 Base T, and/or the like), Token Ring, wireless connection such as IEEE 802.11a-x, and/or the like. Should processing requirements dictate a greater amount speed and/or capacity, distributed network controllers, architectures may similarly be employed to pool, load balance, and/or otherwise increase the communicative bandwidth required by the controller. A communications network may be any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. A network interface may be regarded as a specialized form of an input output interface. Further, multiple network interfaces 810 may be used to engage with various communications network types 813. For example, multiple network interfaces may be employed to allow for the communication over broadcast, multicast, and/or unicast networks.

Input Output interfaces (I/O) 808 may accept, communicate, and/or connect to user input devices 811, peripheral devices 812, cryptographic processor devices 828, and/or the like. I/O may employ connection protocols such as, but not limited to: audio: analog, digital, monaural, RCA, stereo, and/or the like; data: Apple Desktop Bus (ADB), IEEE 1394a-b, serial, universal serial bus (USB); infrared; joystick; keyboard; midi; optical; PC AT; PS/2; parallel; radio; video interface: Apple Desktop Connector (ADC), BNC, coaxial, component, composite, digital, Digital Visual Interface (DVI), high-definition multimedia interface (HDMI), RCA, RF antennae, S-Video, VGA, and/or the like; wireless transceivers: 802.11a/b/g/n/x; Bluetooth; cellular (e.g., code division multiple access (CDMA), high speed packet access (HSPA(+)), high-speed downlink packet access (HSDPA), global system for mobile communications (GSM), long term evolution (LTE), WiMax, etc.); and/or the like. One typical output device may include a video display, which may comprise a Cathode Ray Tube (CRT) or Liquid Crystal Display (LCD) based monitor with an interface (e.g., DVI circuitry and cable) that accepts signals from a video interface. The video interface composites information generated by a computer systemization and generates video signals based on the composited information in a video memory frame. Another output device is a television set, which accepts signals from a video interface. Typically, the video interface provides the composited video information through a video connection interface that accepts a video display interface (e.g., an RCA composite video connector accepting an RCA composite video cable; a DVI connector accepting a DVI display cable, etc.).

User input devices 811 often are a type of peripheral device and may include: card readers, dongles, finger print readers, gloves, graphics tablets, joysticks, keyboards, microphones, mouse (mice), remote controls, retina readers, touch screens (e.g., capacitive, resistive, etc.), trackballs, trackpads, sensors (e.g., accelerometers, ambient light, GPS, gyroscopes, proximity, etc.), styluses, and/or the like.

Peripheral devices 812 may be connected and/or communicate to I/O and/or other facilities of the like such as network interfaces, storage interfaces, directly to the interface bus, system bus, the CPU, and/or the like. Peripheral devices may be external, internal and/or part of the IPOT controller. Peripheral devices may include: antenna, audio devices (e.g., line-in, line-out, microphone input, speakers, etc.), cameras (e.g., still, video, webcam, etc.), dongles (e.g., for copy protection, ensuring secure transactions with a digital signature, and/or the like), external processors (for added capabilities; e.g., crypto devices 528), force-feedback devices (e.g., vibrating motors), network interfaces, printers, scanners, storage devices, transceivers (e.g., cellular, GPS, etc.), video devices (e.g., goggles, monitors, etc.), video sources, visors, and/or the like. Peripheral devices often include types of input devices (e.g., cameras).

It should be noted that although user input devices and peripheral devices may be employed, the controller may be embodied as an embedded, dedicated, and/or monitor-less (i.e., headless) device, wherein access would be provided over a network interface connection.

Cryptographic units such as, but not limited to, microcontrollers, processors 826, interfaces 827, and/or devices 828 may be attached, and/or communicate with the controller. A MC68HC16 microcontroller, manufactured by Motorola Inc., may be used for and/or within cryptographic units. The MC68HC16 microcontroller utilizes a 16-bit multiply-and-accumulate instruction in the 16 MHz configuration and requires less than one second to perform a 512-bit RSA private key operation. Cryptographic units support the authentication of communications from interacting agents, as well as allowing for anonymous transactions. Cryptographic units may also be configured as part of CPU. Equivalent microcontrollers and/or processors may also be used. Other commercially available specialized cryptographic processors include: Broadcom's CryptoNetX and other Security Processors; nCipher's nShield, SafeNet's Luna PCI (e.g., 7100) series; Semaphore Communications' 40 MHz Roadrunner 184; Sun's Cryptographic Accelerators (e.g., Accelerator 6000 PCIe Board, Accelerator 500 Daughtercard); Via Nano Processor (e.g., L2100, L2200, U2400) line, which is capable of performing 500+ MB/s of cryptographic instructions; VLSI Technology's 33 MHz 6868; and/or the like.

### Memory

Generally, any mechanization and/or embodiment allowing a processor to affect the storage and/or retrieval of information is regarded as memory 829. However, memory is commonly a fungible technology and resource, thus, any number of memory embodiments may be employed in lieu of or in concert with one another. It is to be understood that the controller and/or a computer systemization may employ various forms of memory 829. For example, a computer systemization may be configured wherein the functionality of on-chip CPU memory (e.g., registers), RAM, ROM, and any other storage devices are provided by a paper punch tape or paper punch card mechanism; of course such an embodiment would result in an extremely slow rate of operation. In a typical configuration, memory 829 will include ROM 806, RAM 805, and a storage device 814. A storage device 814 may be any conventional computer system storage. Storage devices may include a drum; a (fixed and/or removable) magnetic disk drive; a magneto-optical drive; an optical drive (i.e., Blu-ray®, CD ROM/RAM/Recordable (R)/ReWritable (RW), DVD R/RW, HD DVD R/RW etc.); an array of devices (e.g., Redundant Array of Independent Disks (RAID)); solid state memory devices (USB memory, solid state drives (SSD), etc.); other processor-readable storage mediums; and/or other devices of the like. Thus, a computer systemization generally requires and makes use of memory.

### Component Collection

The memory 829 may contain a collection of program and/or database components and/or data such as, but not limited to: operating system component(s) 815 (operating system); information server component(s) 816 (information server); user interface component(s) 817 (user interface); Web browser component(s) 818 (Web browser); database(s) 819; mail server component(s) 821; mail client component(s) 822; cryptographic server component(s) 820 (cryptographic server); the controller component(s) 835; and/or the like (i.e., collectively a component collection). These components may be stored and accessed from the storage devices and/or from storage devices accessible through an interface bus. Although non-conventional program components such as those in the component collection, typically, are stored in a local storage device 814, they may also be loaded and/or stored in memory such as: peripheral devices, RAM, remote storage facilities through a communications network, ROM, various forms of memory, and/or the like.

### Operating System

The operating system component 815 is an executable program component facilitating the operation of the controller. Typically, the operating system facilitates access of I/O, network interfaces, peripheral devices, storage devices, and/or the like. The operating system may be a highly fault tolerant, scalable, and secure system such as: Apple Macintosh OS X (Server); AT&T Plan 9; Be OS; Unix and Unix-like system distributions (such as AT&T's UNIX; Berkley Software Distribution (BSD) variations such as FreeBSD, NetBSD, OpenBSD, and/or the like; Linux distributions such as Red Hat, Ubuntu, and/or the like); and/or the like operating systems. However, more limited and/or less secure operating systems also may be employed such as Apple Macintosh OS, IBM OS/2, Microsoft DOS, Microsoft Windows 2000/2003/3.1/95/98/CE/Millenium/NT/Vista/XP (Server), Palm OS, and/or the like. An operating system may communicate to and/or with other components in a component collection, including itself, and/or the like. Most frequently, the operating system communicates with other program components, user interfaces, and/or the like. For example, the operating system may contain, communicate, generate, obtain, and/or provide program component, system, user, and/or data communications, requests, and/or responses. The operating system, once executed by the CPU, may enable the interaction with communications networks, data, I/O, peripheral devices, program components, memory, user input devices, and/or the like. The operating system may provide communications protocols that allow the controller to communicate with other entities through a communications network 813. Various communication protocols may be used by the controller as a subcarrier transport mechanism for interaction, such as, but not limited to: multicast, TCP/IP, UDP, unicast, and/or the like.

### Information Server

An information server component 816 is a stored program component that is executed by a CPU. The information server may be a conventional Internet information server such as, but not limited to Apache Software Foundation's Apache, Microsoft's Internet Information Server, and/or the like. The information server may allow for the execution of program components through facilities such as Active Server Page (ASP), ActiveX, (ANSI) (Objective-) C (++), C# and/or .NET, Common Gateway Interface (CGI) scripts, dynamic (D) hypertext markup language (HTML), FLASH, Java, JavaScript, Practical Extraction Report Language (PERL), Hypertext Pre-Processor (PHP), pipes, Python, wireless application protocol (WAP), WebObjects, and/or the like. The information server may support secure communications protocols such as, but not limited to, File Transfer Protocol (FTP); HyperText Transfer Protocol (HTTP); Secure Hypertext Transfer Protocol (HTTPS), Secure Socket Layer (SSL), messaging protocols (e.g., America Online (AOL) Instant Messenger (AIM), Application Exchange (APEX), ICQ, Internet Relay Chat (IRC), Microsoft Network (MSN) Messenger Service, Presence and Instant Messaging Protocol (PRIM), Internet Engineering Task Force's (IETF's) Session Initiation Protocol (SIP), SIP for Instant Messaging and Presence Leveraging Extensions (SIMPLE), open XML-based Extensible Messaging and Presence Protocol (XMPP) (i.e., Jabber or Open Mobile Alliance's (OMA's) Instant Messaging and Presence Service (IMPS)), Yahoo! Instant Messenger Service, and/or the like. The information server provides results in the form of Web pages to Web browsers, and allows for the manipulated generation of the Web pages through interaction with other program components. After a Domain Name System (DNS) resolution portion of an HTTP request is resolved to a particular information server, the information server resolves requests for information at specified locations on the IPOT controller based on the remainder of the HTTP request. For example, a request such as http://123.124.125.126/mylnformation.html might have the IP portion of the request "123.124.125.126" resolved by a DNS server to an information server at that IP address; that information server might in turn further parse the http request for the "/mylnformation.html" portion of the request and resolve it to a location in memory containing the information "mylnformation.html." Additionally, other information serving protocols may be employed across various ports, e.g., FTP communications across port 21, and/or the like. An information server may communicate to and/or with other components in a component collection, including itself, and/or facilities of the like. Most frequently, the information server communicates with the controller database 819, operating systems, other program components, user interfaces, Web browsers, and/or the like.

Access to the database may be achieved through a number of database bridge mechanisms such as through scripting languages as enumerated below (e.g., CGI) and through inter-application communication channels as enumerated below (e.g., CORBA, WebObjects, etc.). Any data requests through a Web browser are parsed through the bridge mechanism into appropriate grammars as required by the controller. In one embodiment, the information server would provide a Web form accessible by a Web browser. Entries made into supplied fields in the Web form are tagged as having been entered into the particular fields, and parsed as such. The entered terms are then passed along with the field tags, which act to instruct the parser to generate queries directed to appropriate tables and/or fields. In one embodiment, the parser may generate queries in standard SQL by instantiating a search string with the proper join/select commands based on the tagged text entries, wherein the resulting command is provided over the bridge mechanism to the controller as a query. Upon generating query results from the query, the results are passed over the bridge mechanism, and may be parsed for formatting and generation of a new results Web page by the bridge mechanism. Such a new results Web page is then provided to the information server, which may supply it to the requesting Web browser.

Also, an information server may contain, communicate, generate, obtain, and/or provide program component, system, user, and/or data communications, requests, and/or responses.

### User Interface

Computer interfaces in some respects are similar to automobile operation interfaces. Automobile operation interface elements such as steering wheels, gearshifts, and speedometers facilitate the access, operation, and display of automobile resources, and status. Computer interaction interface elements such as check boxes, cursors, menus, scrollers, and windows (collectively and commonly referred to as widgets) similarly facilitate the access, capabilities, operation, and display of data and computer hardware and operating system resources, and status. Operation interfaces are commonly called user interfaces. Graphical user interfaces (GUIs) such as the Apple Macintosh Operating System's Aqua, IBM's OS/2, Microsoft's Windows 2000/2003/3.1/95/98/CE/Millenium/NT/XP/Vista/7 (i.e., Aero), Unix's X-Windows (e.g., which may include additional Unix graphic interface libraries and layers such as K Desktop Environment (KDE), mythTV and GNU Network Object Model Environment (GNOME)), web interface libraries (e.g., ActiveX, AJAX, (D)HTML, FLASH, Java, JavaScript, etc. interface libraries such as, but not limited to, Dojo, jQuery(UI), MooTools, Prototype, script.aculo.us, SWFObject, Yahoo! User Interface, any of which may be used and) provide a baseline and means of accessing and displaying information graphically to users.

A user interface component 817 is a stored program component that is executed by a CPU. The user interface may be a conventional graphic user interface as provided by, with, and/or atop operating systems and/or operating environments such as already discussed. The user interface may allow for the display, execution, interaction, manipulation, and/or operation of program components and/or system facilities through textual and/or graphical facilities. The user interface provides a facility through which users may affect, interact, and/or operate a computer system. A user interface may communicate to and/or with other components in a component collection, including itself, and/or facilities of the like. Most frequently, the user interface communicates with operating systems, other program components, and/or the like. The user interface may contain, communicate, generate, obtain, and/or provide program component, system, user, and/or data communications, requests, and/or responses.

### Web Browser

A Web browser component 818 is a stored program component that is executed by a CPU. The Web browser may be a conventional hypertext viewing application such as Microsoft Internet Explorer or Netscape Navigator. Secure Web browsing may be supplied with 128bit (or greater) encryption by way of HTTPS, SSL, and/or the like. Web browsers allowing for the execution of program components through facilities such as ActiveX, AJAX, (D)HTML, FLASH, Java, JavaScript, web browser plug-in APIs (e.g., FireFox, Safari Plug-in, and/or the like APIs), and/or the like. Web browsers and like information access tools may be integrated into PDAs, cellular telephones, and/or other mobile devices. A Web browser may communicate to and/or with other components in a component collection, including itself, and/or facilities of the like. Most frequently, the Web browser communicates with information servers, operating systems, integrated program components (e.g., plug-ins), and/or the like; e.g., it may contain, communicate, generate, obtain, and/or provide program component, system, user, and/or data communications, requests, and/or responses. Of course, in place of a Web browser and information server, a combined application may be developed to perform similar functions of both. The combined application would similarly affect the obtaining and the provision of information to users, user agents, and/or the like from the controller enabled nodes. The combined application may be nugatory on systems employing standard Web browsers.

### Mail Server

A mail server component 821 is a stored program component that is executed by a CPU 803. The mail server may be a conventional Internet mail server such as, but not limited to sendmail, Microsoft Exchange, and/or the like. The mail server may allow for the execution of program components through facilities such as ASP, ActiveX, (ANSI) (Objective-) C (++), C# and/or .NET, CGI scripts, Java, JavaScript, PERL, PHP, pipes, Python, WebObjects, and/or the like. The mail server may support communications protocols such as, but not limited to: Internet message access protocol (IMAP), Messaging Application Programming Interface (MAPI)/Microsoft Exchange, post office protocol (POP3), simple mail transfer protocol (SMTP), and/or the like. The mail server can route, forward, and process incoming and outgoing mail messages that have been sent, relayed and/or otherwise traversing through and/or to the controller.

Access to the mail may be achieved through a number of APIs offered by the individual Web server components and/or the operating system.

Also, a mail server may contain, communicate, generate, obtain, and/or provide program component, system, user, and/or data communications, requests, information, and/or responses.

### Mail Client

A mail client component 822 is a stored program component that is executed by a CPU 803. The mail client may be a conventional mail viewing application such as Apple Mail, Microsoft Entourage, Microsoft Outlook, Microsoft Outlook Express, Mozilla, Thunderbird, and/or the like. Mail clients may support a number of transfer protocols, such as: IMAP, Microsoft Exchange, POP3, SMTP, and/or the like. A mail client may communicate to and/or with other components in a component collection, including itself, and/or facilities of the like. Most frequently, the mail client communicates with mail servers, operating systems, other mail clients, and/or the like; e.g., it may contain, communicate, generate, obtain, and/or provide program component, system, user, and/or data communications, requests, information, and/or responses. Generally, the mail client provides a facility to compose and transmit electronic mail messages.

### Cryptographic Server

A cryptographic server component 820 is a stored program component that is executed by a CPU 803, cryptographic processor 826, cryptographic processor interface 827, cryptographic processor device 828, and/or the like. Cryptographic processor interfaces will allow for expedition of encryption and/or decryption requests by the cryptographic component; however, the cryptographic component, alternatively, may run on a conventional CPU. The cryptographic component allows for the encryption and/or decryption of provided data. The cryptographic component allows for both symmetric and asymmetric (e.g., Pretty Good Protection (PGP)) encryption and/or decryption. The cryptographic component may employ cryptographic techniques such as, but not limited to: digital certificates (e.g., X.509 authentication framework), digital signatures, dual signatures, enveloping, password access protection, public key management, and/or the like. The cryptographic component will facilitate numerous (encryption and/or decryption) security protocols such as, but not limited to: checksum, Data Encryption Standard (DES), Elliptical Curve Encryption (ECC), International Data Encryption Algorithm (IDEA), Message Digest 5 (MD5, which is a one way hash function), passwords, Rivest Cipher (RC5), Rijndael, RSA (which is an Internet encryption and authentication system that uses an algorithm developed in 1977 by Ron Rivest, Adi Shamir, and Leonard Adleman), Secure Hash Algorithm (SHA), Secure Socket Layer (SSL), Secure Hypertext Transfer Protocol (HTTPS), and/or the like. Employing such encryption security protocols, the IPOT may encrypt all incoming and/or outgoing communications and may serve as node within a virtual private network (VPN) with a wider communications network. The cryptographic component facilitates the process of "security authorization" whereby access to a resource is inhibited by a security protocol wherein the cryptographic component effects authorized access to the secured resource. In addition, the cryptographic component may provide unique identifiers of content, e.g., employing and MD5 hash to obtain a unique signature for an digital audio file. A cryptographic component may communicate to and/or with other components in a component collection, including itself, and/or facilities of the like. The cryptographic component supports encryption schemes allowing for the secure transmission of information across a communications network to enable the controller component to engage in secure transactions if so desired. The cryptographic component facilitates the secure accessing of resources on the controller and facilitates the access of secured resources on remote systems; i.e., it may act as a client and/or server of secured resources. Most frequently, the cryptographic component communicates with information servers, operating systems, other program components, and/or the like. The cryptographic component may contain, communicate, generate, obtain, and/or provide program component, system, user, and/or data communications, requests, and/or responses.

### The Database

The database component 819 may be embodied in a database and its stored data. The database is a stored program component, which is executed by the CPU; the stored program component portion configuring the CPU to process the stored data. The database may be a conventional, fault tolerant, relational, scalable, secure database such as Oracle or Sybase. Relational databases are an extension of a flat file. Relational databases consist of a series of related tables. The tables are interconnected via a key field. Use of the key field allows the combination of the tables by indexing against the key field; i.e., the key fields act as dimensional pivot points for combining information from various tables. Relationships generally identify links maintained between tables by matching primary keys. Primary keys represent fields that uniquely identify the rows of a table in a relational database. More precisely, they uniquely identify rows of a table on the "one" side of a one-to-many relationship.

Alternatively, the database may be implemented using various standard data-structures, such as an array, hash, (linked) list, struct, structured text file (e.g., XML), table, and/or the like. Such data-structures may be stored in memory and/or in (structured) files. In another alternative, an object-oriented database may be used, such as Frontier, ObjectStore, Poet, Zope, and/or the like. Object databases can include a number of object collections that are grouped and/or linked together by common attributes; they may be related to other object collections by some common attributes. Object-oriented databases perform similarly to relational databases with the exception that objects are not just pieces of data but may have other types of functionality encapsulated within a given object. If the database is implemented as a data-structure, the use of the database 819 may be integrated into another component such as the controller component 835. Also, the database may be implemented as a mix of data structures, objects, and relational structures. Databases may be consolidated and/or distributed in countless variations through standard data processing techniques. Portions of databases, e.g., tables, may be exported and/or imported and thus decentralized and/or integrated.

In one embodiment, the database component 819 includes several tables 819a-j. A User table 819a may include fields such as, but not limited to: user_id, applicant_id, firstname, lastname, address_line1, address_line2, dob, ssn, credit_check_flag, zipcode, city, state, account_params_list, account_mode, account_type, account_expiry, preferred_bank_name, preferred_branch_name, credit_report, and/or the like. The Users 819a table may support and/or track multiple entity accounts on a controller. A Clients table 819b may include fields such as, but not limited to: client_ID, client_type, client_MAC, client_IP, presentation_format, pixel_count, resolution, screen_size, audio_fidelity, hardware_settings_list, software_ compatibilities_list, installed_apps_list, and/or the like. An Apps table 819c may include fields such as, but not limited to: app_ID, app_name, app_type, OS_compatibilities_list, version, timestamp, developer_ID, and/or the like. A Merchants table 819d may include fields such as, but not limited to: merchant_id, merchant_name, provi merchant_address, ip_address, mac_address, auth_key, port_num, security_settings_list, and/or the like. An Issuers table 819e may include fields such as, but not limited to: account_firstname, account_lastname, account_type, account_num, account_balance_list, billingaddress_line1, billingaddress_ line2, billing_zipcode, billing_state, shipping_preferences, shippingaddress_line1, shippingaddress_line2, shipping_zipcode, shipping_state, issuer_id, issuer_name, issuer_address, ip_address, mac_address, auth_key, port_num, security_settings_list, and/or the like. An Acquirers table 819f may include fields such as, but not limited to: account_firstname, account_lastname, account_type, account_num, account_balance_list, billingaddress_line1, billingaddress_line2, billing_zipcode, billing_state, shipping_preferences, shippingaddress_line1, shippingaddress_line2, shipping_zipcode, shipping_state, and/or the like. A Ledgers table 819g may include fields such as, but not limited to: request_id, timestamp, deposit_amount, batch_id, transaction_id, clear_flag, deposit_account, transaction_ summary, payor_name, payor_account, and/or the like. A Transactions table 819h may include fields such as, but not limited to: order_id, user_id, timestamp, transaction_cost, purchase_details_list, num_products, products_list, product_type, product_params _list, product_title, product_summary, quantity, user_id, client_id, client_ip, client_type, client_model, operating_system, os_version, app_installed_flag, user_id, account_firstname, account_lastname, account_type, account_num, billingaddress_ line1, billingaddress_line2, billing_zipcode, billing_state, shipping_preferences, shippingaddress_line1, shippingaddress_line2, shipping_zipcode, shipping_state, merchant_id, merchant_name, merchant_auth_key, and/or the like. A Batches table 819i may include fields such as, but not limited to: applicant_firstname, applicant_lastname, applicant_address_line1, applicant_address_line2, consumer_bureau_data_list, consumer_bureau_data, applicant_clear_flag, credit_limit, credit_score, account_balances, delinquency_flag, quality_flags, batch_id, transaction_id_list, timestamp_list, cleared_flag_list, clearance_trigger_settings, and/or the like. An Offers table 819j may include fields such as, but not limited to: offer_id, offer_name, offer-byline, merchant_id, product_id, offer_detail_list, offer_expiry_date, and/or the like.

In one embodiment, the database may interact with other database systems. For example, employing a distributed database system, queries and data access by a search controller component may treat the combination of the database, an integrated data security layer database as a single database entity.

In one embodiment, user programs may contain various user interface primitives, which may serve to update the controller. Also, various accounts may require custom database tables depending upon the environments and the types of clients the controller may need to serve. It should be noted that any unique fields may be designated as a key field throughout. In an alternative embodiment, these tables have been decentralized into their own databases and their respective database controllers (i.e., individual database controllers for each of the above tables). Employing standard data processing techniques, one may further distribute the databases over several computer systemizations and/or storage devices. Similarly, configurations of the decentralized database controllers may be varied by consolidating and/or distributing the various database components 819a-j. The controller may be configured to keep track of various settings, inputs, and parameters via database controllers.

The database may communicate to and/or with other components in a component collection, including itself, and/or facilities of the like. Most frequently, the database communicates with the controller component, other program components, and/or the like. The database may contain, retain, and provide information regarding other nodes and data.

### The Controllers

The controller component 835 is a stored program component that is executed by a CPU. In one embodiment, the controller component incorporates any and/or all combinations of the aspects of the controller discussed in the previous figures. As such, the controller affects accessing, obtaining and the provision of information, services, transactions, and/or the like across various communications networks.

The controller component may transform product code snapshots via controller components into real-time offer-driven electronic purchase transaction notifications, and/or the like and use of the controller. In one embodiment, the controller component 835 takes inputs (e.g., product identifier 401, purchase instruction (see 410), product identifier and user identifier 501, purchase input 611, issuer server data 620, user data 625, batch data 639, issuer server data 647, and/or the like) etc., and transforms the inputs via various components (e.g., mPPT component 841, POS component 842, CTE component 843, and/or the like), into outputs (e.g., product info display 405, purchase confirmation display 425, bare product info 530, product info and promotion info 535, purchase confirmation receipt 570, authorization message 627, transaction data 630, authorization message 631-632, batch append data 634, purchase receipt 635, transaction data 645, funds transfer message 652-653, and/or the like).

The controller component enabling access of information between nodes may be developed by employing standard development tools and languages. In one embodiment, the controller server employs a cryptographic server to encrypt and decrypt communications. The controller component may communicate to and/or with other components in a component collection, including itself, and/or facilities of the like. Most frequently, the controller component communicates with the controller database, operating systems, other program components, and/or the like. The controller may contain, communicate, generate, obtain, and/or provide program component, system, user, and/or data communications, requests, and/or responses.

### Distributed Controllers

The structure and/or operation of any of the node controller components may be combined, consolidated, and/or distributed in any number of ways to facilitate development and/or deployment. Similarly, the component collection may be combined in any number of ways to facilitate deployment and/or development. To accomplish this, one may integrate the components into a common code base or in a facility that can dynamically load the components on demand in an integrated fashion.

The component collection may be consolidated and/or distributed in countless variations through standard data processing and/or development techniques. Multiple instances of any one of the program components in the program component collection may be instantiated on a single node, and/or across numerous nodes to improve performance through load-balancing and/or data-processing techniques. Furthermore, single instances may also be distributed across multiple controllers and/or storage devices; e.g., databases. All program component instances and controllers working in concert may do so through standard data processing communication techniques.

The configuration of the controller will depend on the context of system deployment. Factors such as, but not limited to, the budget, capacity, location, and/or use of the underlying hardware resources may affect deployment requirements and configuration. Regardless of if the configuration results in more consolidated and/or integrated program components, results in a more distributed series of program components, and/or results in some combination between a consolidated and distributed configuration, data may be communicated, obtained, and/or provided. Instances of components consolidated into a common code base from the program component collection may communicate, obtain, and/or provide data. This may be accomplished through intra-application data processing communication techniques such as, but not limited to: data referencing (e.g., pointers), internal messaging, object instance variable communication, shared memory space, variable passing, and/or the like.

If component collection components are discrete, separate, and/or external to one another, then communicating, obtaining, and/or providing data with and/or to other component components may be accomplished through inter-application data processing communication techniques such as, but not limited to: Application Program Interfaces (API) information passage; (distributed) Component Object Model ((D)COM), (Distributed) Object Linking and Embedding ((D)OLE), and/or the like), Common Object Request Broker Architecture (CORBA), Jini local and remote application program interfaces, JavaScript Object Notation (JSON), Remote Method Invocation (RMI), SOAP, process pipes, shared files, and/or the like. Messages sent between discrete component components for inter-application communication or within memory spaces of a singular component for intra-application communication may be facilitated through the creation and parsing of a grammar. A grammar may be developed by using development tools such as lex, yacc, XML, and/or the like, which allow for grammar generation and parsing capabilities, which in turn may form the basis of communication messages within and between components.

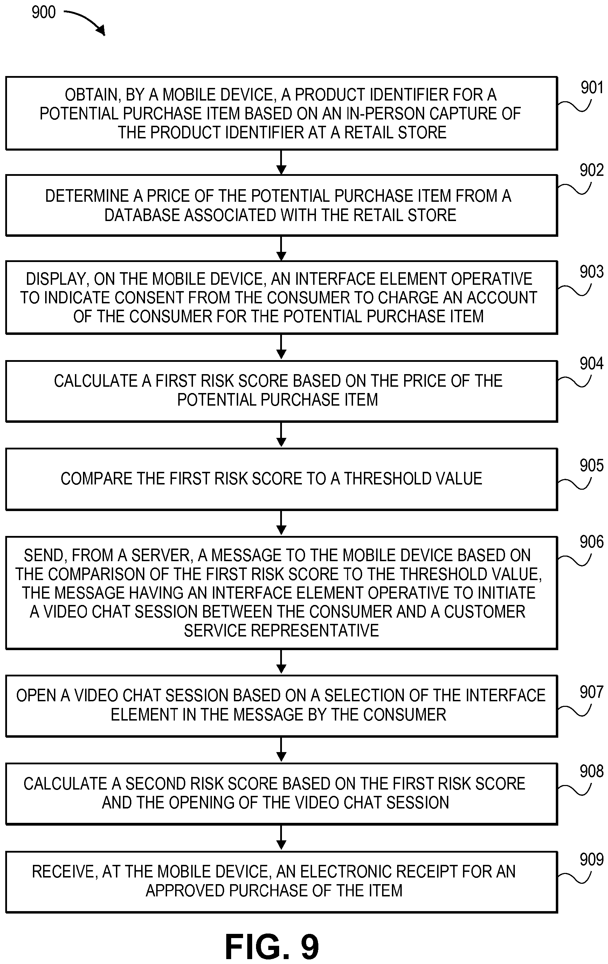

FIG. 9 is a flowchart of a process in accordance with an embodiment. Process 900 can be implemented by a computer or other machine. In operation 901, a product identifier for a potential purchase item is obtained by a mobile device based on an in-person capture of the product identifier at a retail store. in operation 902, a price of the potential purchase item is determined from a database associated with the retail store. In operation 903, an interface element (e.g., a button) is displayed on a mobile device operative to indicate consent from the consumer to charge an account of the consumer for the potential purchase item. In operation 904, a first risk score is calculated based on the price of the potential purchase item. In operation 905, the first risk score is compared to a threshold value. In operation 906, a message is sent from a server to the mobile device based on the comparison of the first risk score to the threshold value, the message having an interface element operative to initiate a video chat session between the consumer and a customer service representative. In operation 907, a video chat session is opened based on a selection of the interface element in the message by the consumer. In operation 908, a second risk score is calculated based on the first risk score and the opening of the video chat session. In operation 909, an electronic receipt for an approved purchase of the item is received at the mobile device.

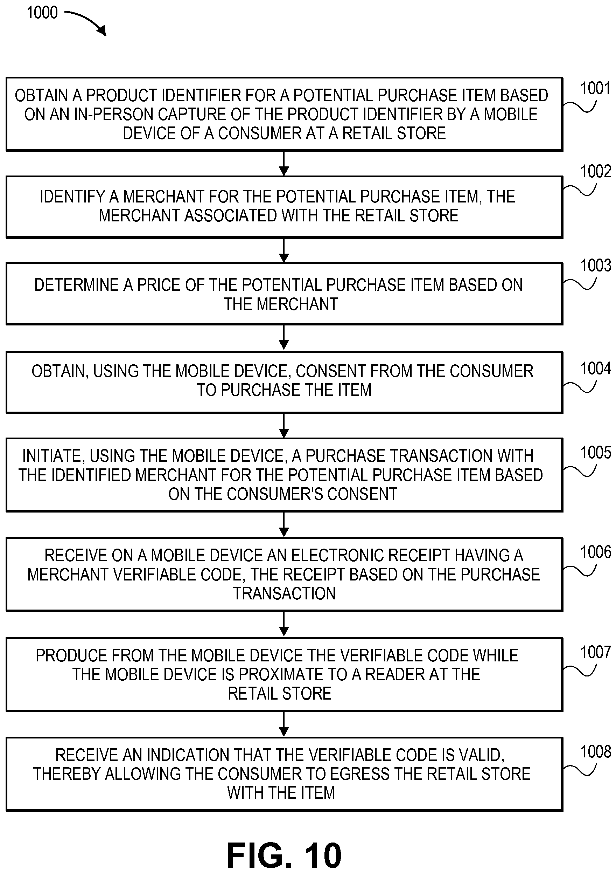

FIG. 10 is a flowchart of a process in accordance with an embodiment. Process 1000 can be implemented by a computer or other machine. In operation 1001, a product identifier for a potential purchase item is obtained based on an in-person capture of the product identifier by a mobile device of a consumer at a retail store. In operation 1002, a merchant is identified for the potential purchase item, the merchant associated with the retail store. In operation 1003, a price of the potential purchase item is determined based on the merchant. In operation 1004, consent from the consumer is obtained, using the mobile device, to purchase the item. In operation 1005, a purchase transaction with the identified merchant is initiated, using the mobile device, for the potential purchase item based on the consumer's consent. In operation 1006, an electronic receipt having a merchant verifiable code is received on the mobile device, the receipt based on the purchase transaction. In operation 1007, the verifiable code is produced (e.g., shown, wirelessly emitted) from the mobile device while the mobile device is proximate to a reader at the retail store. in operation 1008, an indication that the verifiable code is valid is received, thereby allowing the consumer to egress the retail store with the item.

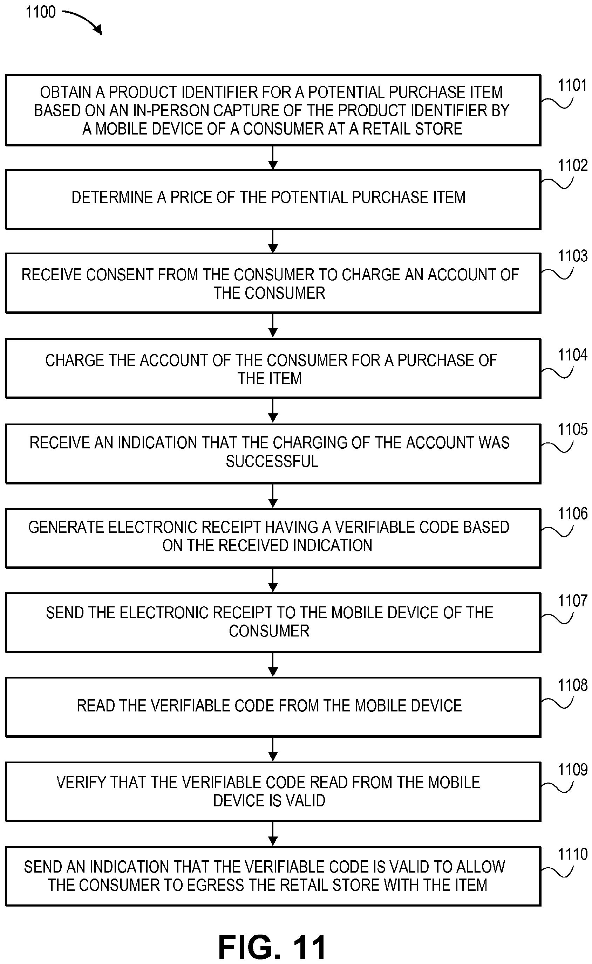

FIG. 11 is a flowchart of a process in accordance with an embodiment. Process 1100 can be implemented by a computer or other machine. In operation 1101, a product identifier for a potential purchase item is obtained based on an in-person capture of the product identifier by a mobile device of a consumer at a retail store. In operation 1102, a price of the potential purchase item is determined. In operation 1103, consent is received from the consumer to charge an account of the consumer. In operation 1104, the account of the consumer is charged for a purchase of the item. In operation 1105, an indication that the charging of the account was successful is received. In operation 1106, an electronic receipt having a verifiable code is generated based on the received indication. In operation 1107, the electronic receipt is sent to the mobile device of the consumer. In operation 1108, the verifiable code is read from the mobile device. In operation 1109, the verifiable code read from the mobile device is verified to be valid. In operation 1110, an indication that the verifiable code is valid is sent to allow the consumer to egress the retail store with the item.

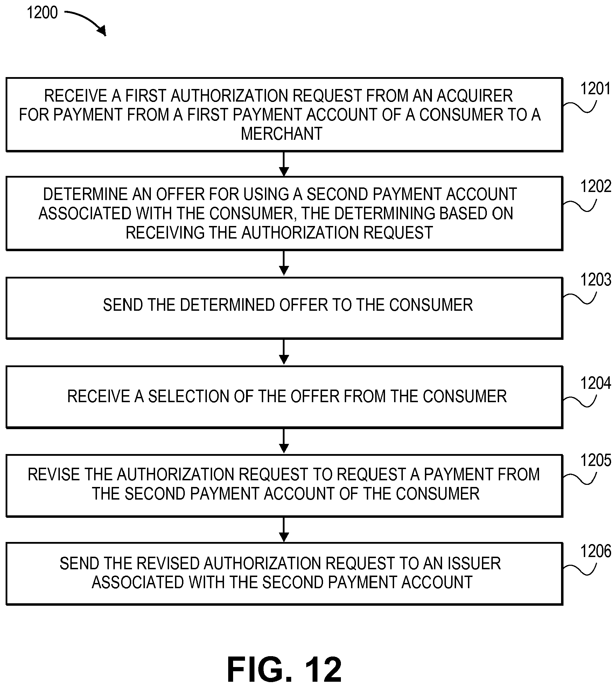

FIG. 12 is a flowchart of a process in accordance with an embodiment. Process 1200 can be implemented by a computer or other machine. In operation 1201, an authorization request from an acquirer is received for payment from a first payment account of a consumer to a merchant. In operation 1202, an offer for using a second payment account associated with the consumer is determined (e.g., auctioned among the consumer's issuers), the determining based on receiving the authorization request. In operation 1203, the determined offer is sent to the consumer. In operation 1204, a selection of the offer is received from the consumer. In operation 1205, the authorization request is revised to request a payment from the second payment account of the consumer. In operation 1206, the revised authorization request is sent to an issuer associated with the second payment account.

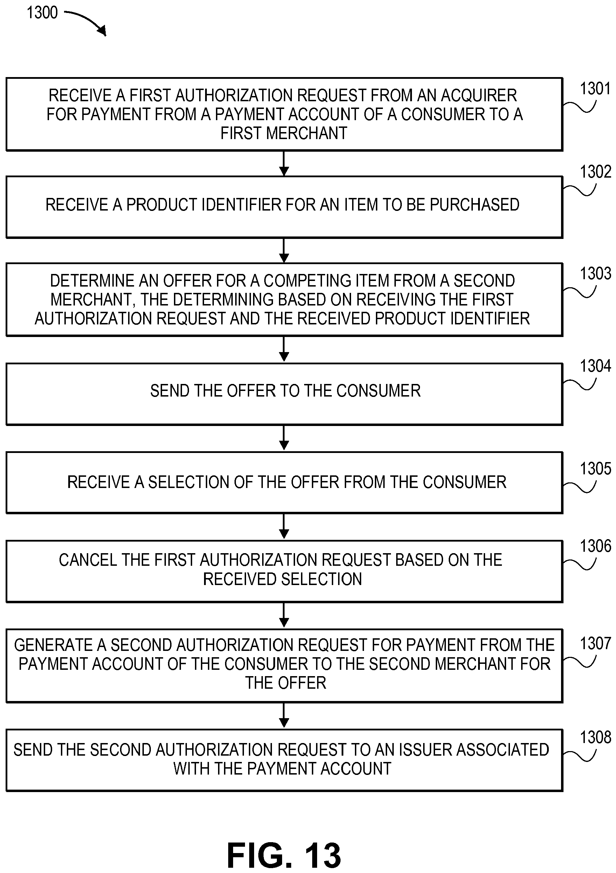

FIG. 13 is a flowchart of a process in accordance with an embodiment. Process 1300 can be implemented by a computer or other machine. In operation 1301, a first authorization request is received from an acquirer for payment from a payment account of a consumer to a first merchant. In operation 1302, a product identifier for an item to be purchased is received. In operation 1303, an offer for a competing item from a second merchant is determined, the determining based on receiving the first authorization request and the received product identifier. In operation 1304, the offer is sent to the consumer. In operation 1305, a selection of the offer is received from the consumer. In operation 1306, the first authorization request is canceled based on the received selection. In operation 1307, a second authorization request is generated for payment from the payment account of the consumer to the second merchant for the offer. In operation 1308, the second authorization request is sent to an issuer associated with the payment account.

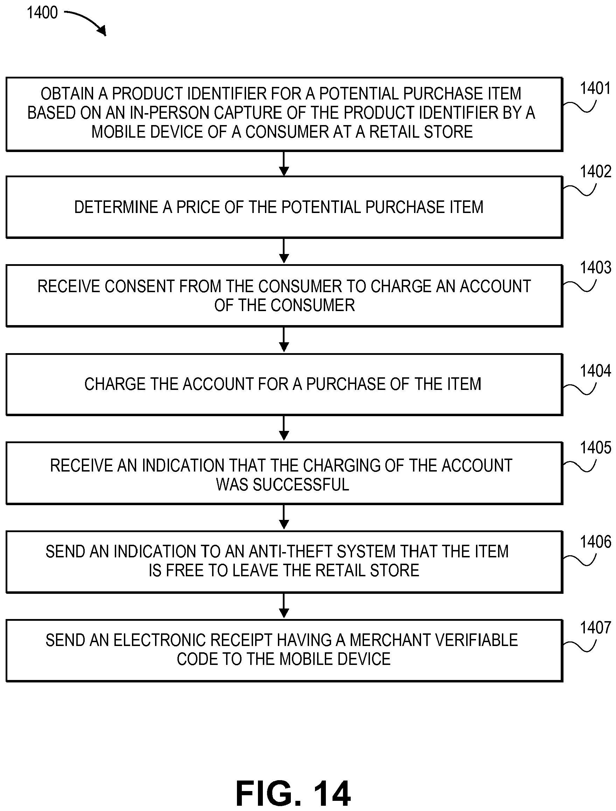

FIG. 14 is a flowchart of a process in accordance with an embodiment. Process 1400 can be implemented by a computer or other machine. In operation 1401, a product identifier for a potential purchase item is obtained based on an in-person capture of the product identifier by a mobile device of a consumer at a retail store. In operation 1402, a price of the potential purchase item is determined (e.g., looked up from a database). In operation 1403, consent is received from the consumer to charge an account of the consumer. In operation 1404, the account is charged for a purchase of the item. In operation 1405, an indication that the charging of the account was successful is received. In operation 1406, an indication is sent to an anti-theft system that the item is free to leave the retail store. In operation 1407, and electronic receipt having a merchant verifiable code is sent to the mobile device.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application, may be implemented as software code to be executed by a processor using any suitable computer language such as, for example, Java, C++ or Perl using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

A recitation of "a", "an" or "the" is intended to mean "one or more" unless specifically indicated to the contrary.

## Claims

1. A method performed in a retail store having an anti-theft system (261, 262, 263), comprising:
receiving, by a server (265) from a mobile device (201) of a consumer at the retail store, a product identifier (205) for a potential purchase item which is obtained based on an in-person capture of the product identifier by the mobile device;
identifying, by the server, a merchant for the potential purchase item, the merchant being associated with the retail store;
determining, by the server, a price of the potential purchase item based on the merchant;
obtaining, by the server from the mobile device, consent from the consumer to purchase the item;
initiating, by the server using the mobile device, a purchase transaction with the identified merchant for the potential purchase item based on the consumer's consent;
providing by the server to the mobile device an electronic receipt (252) having a merchant verifiable code, the receipt being based on the purchase transaction;
receiving the verifiable code (251) from a reader (260) at the retail store, the verifiable code having been read from the mobile device using the reader while the mobile device is proximate to the reader;
verifying that the verifiable code is valid;
receiving an indication that the verifiable code is valid; and
detecting at the anti-theft system an anti-theft tag (257) of an item (210);
in response to detecting the anti-theft tag, determining whether the anti-theft tag matches a product associated with the verifiable code; and
in response to determination of a match between the product and the anti-theft tag, disarming the anti-theft system for the anti-theft tag to allow the item to leave the store.

2. The method of claim 1 wherein the producing includes:
displaying on a display of the mobile device the verifiable code, the verifiable code rendered on the display to be optically read by the reader.

3. The method of claim 2 wherein the verifiable code is selected from the group consisting of a barcode, a two-dimensional barcode, and a QR Code(R) two-dimensional code.

4. The method of claim 1 wherein the producing includes:
sending a wireless signal from the mobile device, the wireless signal including the verifiable code and configured to be read by the reader.

5. The method of claim 4 wherein the verifiable code includes a digital certificate.

6. The method of claim 1 wherein the obtaining the consent from the consumer includes: determining a default payment account for the consumer; displaying an authorization interface on a display of the mobile device, the displaying of the authorization interface automatically initiated upon the capturing of the product identifier, the authorization interface configured to require one tap from the consumer in order to initiate the payment transaction with the default payment account.

7. The method of claim 1 wherein the product identifier is selected from the group consisting of a Universal Product Code (UPC) barcode, a QR Code(R) two-dimensional code, and a radio frequency identification (RFID) tag.

8. The method of claim 1 wherein the determining the price of the potential purchase item includes:
accessing an inventory database of the retail location merchant.

9. The method of claim 1 wherein the identifying the merchant includes:
obtaining a geographical coordinate from the mobile device; and looking up the merchant from the geographical coordinate.

10. The method of claim 1 wherein the operations are performed in the order shown.

11. The method of claim 1 wherein each operation is performed by a processor operatively coupled to a memory.

12. A system comprising:
a reader (260) for use in a retail store having an anti-theft system (261, 262, 263); and
a mobile device (201) for use by a consumer at the store;
a processing system (265); and
a memory (266) in communication with the processing system, wherein the processing system is configured to execute steps comprising:
receiving from the mobile device a product identifier (205) for a potential purchase item which is obtained based on an in-person capture of the product identifier by the mobile device of the consumer at the retail store;
identifying a merchant for the potential purchase item, the merchant being associated with the retail store;
determining a price of the potential purchase item based on the merchant;
obtaining, from the mobile device, consent from the consumer to purchase the item;
initiating, using the mobile device, a purchase transaction with the identified merchant for the potential purchase item based on the consumer's consent;
providing to the mobile device an electronic receipt (252) having a merchant verifiable code, the receipt based on the purchase transaction;
receiving the verifiable code (251) from the reader (260), the verifiable code having been read from the mobile device using the reader while the mobile device is proximate to the reader at the retail store;
verifying that the verifiable code is valid;
receiving an indication that the verifiable code is valid; and
detecting at the anti-theft system an anti-theft tag (257) of an item (210);
in response to detecting the anti-theft tag, determining whether the anti-theft tag matches a product associated with the verifiable code; and
in response to determination of a match between the product and the anti-theft tag, disarming the anti-theft system for the anti-theft tag to allow the item to leave the store.

13. A mobile device configured for use in a method as claimed in any one of claims 1 to 11.

14. A system according to claim 12 configured to perform a method as claimed in any one of claims 1 to 11.

15. A non-transitory computer-readable storage medium, the computer-readable storage medium comprising computer executable instructions which, when executed, cause a processing system to perform a method as claimed in any one of claims 1 to 11.

## Patentansprüche

1. Verfahren, durchgeführt in einem Einzelhandelsgeschäft mit einem Diebstahlsicherungssystem (261, 262, 263), umfassend:
Empfangen, durch einen Server (265) von einem Mobilgerät (201) eines Kunden im Einzelhandelsgeschäft, einer Produktkennung (205) für einen potenziellen Einkaufsgegenstand, die basierend auf einer persönlichen Aufnahme der Produktkennung durch das Mobilgerät erhalten wird;
Identifizieren, durch den Server, eines Händlers für den potenziellen Einkaufsgegenstand, wobei der Händler mit dem Einzelhandelsgeschäft assoziiert ist;
Ermitteln, durch den Server, eines Preises des potenziellen Einkaufsgegenstands basierend auf dem Händler;
Erhalten, durch den Server vom Mobilgerät, einer Zustimmung vom Kunden, den Gegenstand zu kaufen;
Initiieren, durch den Server unter Nutzung des Mobilgeräts, einer Kauftransaktion mit dem identifizierten Händler für den potenziellen Einkaufsgegenstand, basierend auf der Zustimmung des Kunden;
Bereitstellen, durch den Server an das Mobilgerät, einer elektronischen Quittung (252), die einen durch den Händler verifizierbaren Code besitzt, wobei die Quittung auf der Kauftransaktion basiert;
Empfangen des verifizierbaren Codes (251) von einem Lesegerät (260) im Einzelhandelsgeschäft, wobei der verifizierbare Code unter Nutzung des Lesegeräts vom Mobilgerät eingelesen wurde, während sich das Mobilgerät in der Nähe des Lesegeräts befindet;
Verifizieren, dass der verifizierbare Code gültig ist;
Empfangen einer Angabe, dass der verifizierbare Code gültig ist; und
Erkennen, am Diebstahlsicherungssystem, eines Diebstahlsicherungs-Tags (257) eines Gegenstands (210);
in Reaktion auf ein Erkennen des Diebstahlsicherungs-Tags, Ermitteln, ob das Diebstahlsicherungs-Tag mit einem mit dem verifizierbaren Code assoziierten Produkt übereinstimmt; und
in Reaktion auf ein Ermitteln einer Übereinstimmung zwischen dem Produkt und dem Diebstahlsicherungs-Tag, Deaktivieren des Diebstahlsicherungssystems für das Diebstahlsicherungs-Tag, um zu ermöglichen, dass der Gegenstand das Geschäft verlässt.

2. Verfahren nach Anspruch 1, wobei das Produzieren Folgendes beinhaltet:
Anzeigen des verifizierbaren Codes auf einer Anzeige des Mobilgeräts, wobei der verifizierbare Code so auf der Anzeige wiedergegeben wird, dass er optisch durch das Lesegerät eingelesen werden kann.

3. Verfahren nach Anspruch 2, wobei der verifizierbare Code aus einer Gruppe ausgewählt wird, die aus einem Barcode, einem zweidimensionalen Barcode und einem zweidimensionalen QR-Code(R)-Code besteht.

4. Verfahren nach Anspruch 1, wobei das Produzieren Folgendes beinhaltet:
Senden eines drahtlosen Signals vom Mobilgerät, wobei das drahtlose Signal den verifizierbaren Code beinhaltet und dazu konfiguriert ist, durch das Lesegerät eingelesen zu werden.

5. Verfahren nach Anspruch 4, wobei der verifizierbare Code ein digitales Zertifikat beinhaltet.

6. Verfahren nach Anspruch 1, wobei das Erhalten der Zustimmung vom Kunden Folgendes beinhaltet: Ermitteln eines Standardzahlungskontos für den Kunden; Anzeigen einer Autorisierungsoberfläche auf einer Anzeige des Mobilgeräts, wobei das Anzeigen der Autorisierungsoberfläche automatisch bei dem Aufnehmen der Produktkennung initiiert wird, wobei die Autorisierungsoberfläche konfiguriert ist, eine Berührung vom Kunden zu erfordern, um die Zahlungstransaktion mit dem Standardzahlungskonto zu initiieren.

7. Verfahren nach Anspruch 1, wobei die Produktkennung aus der Gruppe ausgewählt wird, die einen Universal Product Code (UPC)-Barcode, einen zweidimensionalen QR-Code(R)-Code und ein Radiofrequenz-Identifikations (RFID)-Tag beinhaltet.

8. Verfahren nach Anspruch 1, wobei das Ermitteln des Preises des potenziellen Einkaufsgegenstands Folgendes beinhaltet:
Zugreifen auf eine Inventardatenbank des Einhandelsstandorthändlers.

9. Verfahren nach Anspruch 1, wobei das Identifizieren des Händlers Folgendes beinhaltet:
Erhalten einer geografischen Koordinate vom Mobilgerät; und Suchen des Händlers nach der geografischen Koordinate.

10. Verfahren nach Anspruch 1, wobei die Operationen in der dargestellten Reihenfolge durchgeführt werden.

11. Verfahren nach Anspruch 1, wobei jede Operation durch einen operativ mit einem Speicher verbundenen Prozessor durchgeführt wird.

12. System, umfassend:
ein Lesegerät (260) zur Nutzung in einem Einzelhandelsgeschäft, das ein Diebstahlsicherungssystem (261, 262, 263) besitzt; und
ein Mobilgerät (201) zur Nutzung durch einen Kunden im Geschäft;
ein Verarbeitungssystem (265); und
einen Speicher (266) in Kommunikation mit dem Verarbeitungssystem, wobei das Verarbeitungssystem konfiguriert ist, Schritte auszuführen, die Folgendes umfassen:
Empfangen, vom Mobilgerät, einer Produktkennung (205) für einen potenziellen Einkaufsgegenstand, die basierend auf einer persönlichen Aufnahme der Produktkennung durch das Mobilgerät des Kunden im Einzelhandelsgeschäft erhalten wird;
Identifizieren eines Händlers für den potenziellen Einkaufsgegenstand, wobei der Händler mit dem Einzelhandelsgeschäft assoziiert ist;
Ermitteln eines Preises des potenziellen Einkaufsgegenstands basierend auf dem Händler;
Erhalten, vom Mobilgerät, einer Zustimmung vom Kunden, den Gegenstand zu kaufen;
Initiieren, unter Nutzung des Mobilgeräts, einer Kauftransaktion mit dem identifizierten Händler für den potenziellen Einkaufsgegenstand, basierend auf der Zustimmung des Kunden;
Bereitstellen, an das Mobilgerät, einer elektronischen Quittung (252), die einen durch den Händler verifizierbaren Code besitzt, wobei die Quittung auf der Kauftransaktion basiert;
Empfangen des verifizierbaren Codes (251) von einem Lesegerät (260), wobei der verifizierbare Code unter Nutzung des Lesegeräts vom Mobilgerät eingelesen wurde, während sich das Mobilgerät im Einzelhandelsgeschäft in der Nähe des Lesegeräts befindet;
Verifizieren, dass der verifizierbare Code gültig ist;
Empfangen einer Angabe, dass der verifizierbare Code gültig ist; und
Erkennen, am Diebstahlsicherungssystem, eines Diebstahlsicherungs-Tags (257) eines Gegenstands (210);
in Reaktion auf ein Erkennen des Diebstahlsicherungs-Tags, Ermitteln, ob das Diebstahlsicherungs-Tag mit einem mit dem verifizierbaren Code assoziierten Produkt übereinstimmt; und
in Reaktion auf ein Ermitteln einer Übereinstimmung zwischen dem Produkt und dem Diebstahlsicherungs-Tag, Deaktivieren des Diebstahlsicherungssystems für das Diebstahlsicherungs-Tag, um zu ermöglichen, dass der Gegenstand das Geschäft verlässt.

13. Mobilgerät, das zur Nutzung bei einem Verfahren nach einem der Ansprüche 1 bis 11 konfiguriert ist.

14. System nach Anspruch 12, das konfiguriert ist, ein Verfahren nach einem der Ansprüche 1 bis 11 durchzuführen.

15. Nicht flüchtiges computerlesbares Speichermedium, das computerlesbare Speichermedium computerausführbare Anweisungen umfassend, die, wenn sie ausgeführt werden, ein Verarbeitungssystem veranlassen, ein Verfahren nach einem der Ansprüche 1 bis 11 durchzuführen.

## Revendications

1. Procédé réalisé dans un magasin de détail ayant un système antivol (261, 262, 263), comprenant :
la réception, par un serveur (265), à partir d'un dispositif mobile (201) d'un consommateur au niveau du magasin de détail, d'un identifiant de produit (205) pour un article d'achat potentiel qui est obtenu sur la base d'une détection en présentiel de l'identifiant de produit par le dispositif mobile ;
l'identification, par le serveur, d'un négociant pour l'article d'achat potentiel, le négociant étant associé avec le magasin de détail ;
la détermination, par le serveur, d'un prix de l'article d'achat potentiel sur la base du négociant ;
l'obtention, par le serveur, du dispositif mobile, du consentement du consommateur pour acheter l'article ;
l'initiation, par le serveur utilisant le dispositif mobile, d'une transaction d'achat avec le négociant identifié pour l'article d'achat potentiel sur la base d'un consentement du consommateur ;
la fourniture, par le serveur au dispositif mobile d'un reçu électronique (252) ayant un code de négociant vérifiable, le reçu étant basé sur la transaction d'achat ;
la réception du code vérifiable (251) par un lecteur (260) au niveau du magasin de détail, le code vérifiable ayant été lu par le dispositif mobile en utilisant le lecteur pendant que le dispositif mobile est à proximité du lecteur ;
la vérification que le code vérifiable est valide ;
la réception d'une indication que le code vérifiable est valide ; et
la détection au niveau du système antivol d'une étiquette antivol (257) d'un article (210) ;
en réponse à la détection de l'étiquette antivol, la détermination si l'étiquette antivol correspond avec un produit associé avec le code vérifiable ; et
en réponse à la détermination d'une correspondance entre le produit et l'étiquette antivol, la désactivation du système antivol pour l'étiquette antivol pour permettre à l'article de quitter le magasin.

2. Procédé selon la revendication 1, dans lequel l'étape de réalisation comprend :
l'affichage sur un affichage du dispositif mobile du code vérifiable, le code vérifiable étant rendu sur l'affichage optiquement lisible par le lecteur.

3. Procédé selon la revendication 2, dans lequel le code vérifiable est choisi dans le groupe constitué d'un code-barres, d'un code-barres bidimensionnel, et d'un code QR (R) code bidimensionnel.

4. Procédé selon la revendication 1, dans lequel l'étape de réalisation comprend :
l'envoi d'un signal sans fil à partir du dispositif mobile, le signal sans fil incluant le code vérifiable et étant configuré pour être lu par le lecteur.

5. Procédé selon la revendication 4, dans lequel le code vérifiable inclut un certificat numérique.

6. Procédé selon la revendication 1, dans lequel l'obtention du consentement du consommateur inclut : la détermination d'un compte de paiement par défaut pour le consommateur ; l'affichage d'une interface d'autorisation sur un affichage du dispositif mobile, l'affichage de l'interface d'autorisation étant initiée automatiquement lors de la saisie de l'identifiant de produit, l'interface d'autorisation étant configurée pour nécessiter une frappe du consommateur afin d'initier la transaction de paiement avec le compte de paiement par défaut.

7. Procédé selon la revendication 1, dans lequel l'identifiant de produit est choisi dans le groupe constitué d'un code-barres Code de Produit Universel (UPC), d'un code QR (R) bidimensionnel, et d'une étiquette d'identification par radio fréquence (RFID).

8. Procédé selon la revendication 1, dans lequel la détermination du prix de l'article d'achat potentiel inclut :
l'accès à une base de données d'inventaire du lieu du négociant en détail.

9. Procédé selon la revendication 1, dans lequel l'identification du négociant inclut :
l'obtention d'une coordonnée géographique à partir du dispositif mobile ; et la recherche du négociant à partir de la coordonnée géographique.

10. Procédé selon la revendication 1, dans lequel les opérations sont réalisées dans l'ordre présenté.

11. Procédé selon la revendication 1, dans lequel chaque opération est réalisée par un processeur couplé fonctionnellement à une mémoire.

12. Système comprenant :
un lecteur (260) destiné à une utilisation dans un magasin de détail ayant un système antivol (261, 262, 263) ; et
un dispositif mobile (201) destiné à une utilisation par un consommateur dans le magasin ;
un système d'exploitation (265) ; et
une mémoire (266) en communication avec le système d'exploitation, où le système d'exploitation est configuré pour exécuter des étapes comprenant :
la réception, à partir du dispositif mobile, d'un identifiant de produit (205) pour un article d'achat potentiel qui est obtenu sur la base d'une détection en présentiel de l'identifiant de produit par le dispositif mobile du consommateur au niveau du magasin de détail ;
l'identification d'un négociant pour l'article d'achat potentiel, le négociant étant associé avec le magasin de détail ;
la détermination d'un prix de l'article d'achat potentiel sur la base du négociant ;
l'obtention, à partir du dispositif mobile, d'un consentement du consommateur pour acheter l'article ;
l'initiation, en utilisant le dispositif mobile, d'une transaction d'achat avec le négociant identifié pour l'article d'achat potentiel sur la base du consentement du consommateur ;
la fourniture au dispositif mobile d'un reçu électronique (252) ayant un code de négociant vérifiable, le reçu étant basé sur la transaction d'achat ;
la réception du code vérifiable (251) à partir du lecteur (260), le code vérifiable ayant été lu à partir du dispositif mobile en utilisant le lecteur lorsque le dispositif mobile est à proximité du lecteur au niveau du magasin de détail ;
la vérification que le code vérifiable est valide ;
la réception d'une indication que le code vérifiable est valide ; et
la détection au niveau du système antivol d'une étiquette antivol (257) d'un article (210);
en réponse à la détection de l'étiquette antivol, la détermination si l'étiquette antivol correspond avec un produit associé avec le code vérifiable ; et
en réponse à la détermination d'une correspondance entre le produit et l'étiquette antivol, la désactivation du système antivol pour l'étiquette antivol pour permettre à l'article de quitter le magasin.

13. Dispositif mobile configuré pour une utilisation dans un procédé selon l'une quelconque des revendications 1 à 11.

14. Système selon la revendication 12, configuré pour exécuter un procédé selon l'une quelconque des revendications 1 à 11.

15. Support de stockage non transitoire lisible par ordinateur, le support de stockage lisible par ordinateur comprenant des instructions exécutables par ordinateur qui, lorsqu'elles sont exécutées, font qu'un système d'exploitation exécute un procédé selon l'une quelconque des revendications 1 à 11.
